# EUROPÄISCHE PATENTSCHRIFT

(11) **EP 2 427 324 B1**
(45) Veröffentlichungstag und Bekanntmachung des Hinweises auf die Patenterteilung: **18.10.2017**
(21) Anmeldenummer: 10719912.7
(22) Anmeldetag: 30.04.2010
(51) Int. Cl.: B29C 45/14, B29D 11/00, G02B 5/128, B29L 11/00

(54) **RETRO-REFLEKTIERENDER MARKER**
RETRO-REFLECTIVE MARKER
MARQUEUR RÉTRO-RÉFLÉCHISSANT

(30) Priorität: 06.05.2009 DE 102009019986
(43) Veröffentlichungstag der Anmeldung: 14.03.2012
(73) Patentinhaber: Ilumark GmbH, 85622 Feldkirchen (DE)
(72) Erfinder: ROSSNER, Holger-Claus, 85622 Feldkirchen (DE)
(74) Vertreter: Müller-Boré & Partner Patentanwälte PartG mbB
(86) Internationale Anmeldenummer: PCT/EP2010/002660
(87) Internationale Veröffentlichungsnummer: WO 2010/127811

(56) Entgegenhaltungen:
- DE-A1- 2 658 743
- DE-U1- 29 604 910
- JP-A- 5 329 882
- JP-A- 58 011 902
- US-A- 3 365 790
- US-A- 4 416 509
- US-A- 5 175 645
- US-A1- 2002 075 579

## Beschreibung

Gegenstände der vorliegenden Anmeldung sind ein Reflektorkörper, insbesondere ein kugelförmiger retro-reflektierender Marker, welcher mehrere Reflektorkörpersegmente aufweist, ein Reflektorkörpersegment, zur Herstellung eines solchen Reflektorkörpers, und Verfahren zur Herstellung des Reflektorkörpersegments und des Reflektorkörpers.

Retro-reflektierende Körper werden gegenwärtig z.B. im Gesundheitswesen, im Filmgeschäft und in der Computerbranche bei verschiedenen Anwendungen eingesetzt, um z.B. eine dreidimensionale Positionserkennung zu ermöglichen. Dabei finden retro-reflektierende Körper Anwendung z.B. in der bildgestützten Chirurgie, bei der Überwachung einer Bewegung während einer Radiochirurgiebestrahlung, bei der Optimierung eines Bewegungsablaufs für Hochleistungssportler, bei so genannten Feedback-Bewegungsabläufen in der Rehabilitation, bei der Aufzeichnung von Bewegungsabläufen im Bereich des so genannten "Motion Capturing" und beim Lokalisieren von Personen und Werkzeugen für "Virtual Reality" Darstellungen.

Bekannt sind ebenfalls Verwendungen retro-reflektierender Materialien im Straßenverkehr. Die WO 98/00737 A1 beschreibt einen Straßenpfosten mit drei Streifen mit lentikularen Elementen.

Bei der Retro-Reflexion werden die reflektierten Lichtstrahlen im Gegensatz zur diffusen Reflexion einer Oberfläche im Wesentlichen parallel zu den einfallenden Lichtstrahlen wieder direkt in dieselbe Richtung - also zurück zur Lichtquelle reflektiert. Dies ist unabhängig vom Einfallswinkel bis zu einem Grenzwinkel in dem die oben dargestellten Kugeln sich gegenseitig verdecken.

Zur Positionsbestimmung werden die retro-reflektierenden Körper durch eine Lichtquelle, z.B. durch ein herkömmliches Blitzgerät oder einen Infrarotblitzring beleuchtet und reflektieren das Licht in einem sehr engen Winkelbereich zur Einstrahlrichtung wieder in Richtung der Lichtquelle zurück. Die beleuchtete Szene kann z.B. von einer Kamera gefilmt werden. Die retro-reflektierenden Körper weisen im aufgenommenen Bild aufgrund der Retro-Reflexion ähnlich einer Lichtquelle eine deutlich größere Helligkeit auf als die nicht reflektierende und daher dunklere Umgebung. Die retro-reflektierenden Körper können daher software-basiert leicht von den umgebenden Objekten isoliert und detektiert werden.

Die retro-reflektierenden Körper können auf ortsfesten Referenzpunkten und/oder auf Körperteilen und/oder auf Instrumenten/Werkzeugen z.B. durch eine Klemm- oder Schraubvorrichtung fixiert werden. Wenn sie auf Instrumenten oder Werkzeugen angebracht sind folgen sie dem Bewegungsverlauf des fixierten Körpers bzw. Instruments/ Werkzeugs.

Über die Filmaufnahme kann ein Bewegungsablauf und/oder eine Position des Werkzeugs relativ zu einer Umgebung, insbesondere zu Referenzpunkten, wie z.B. ortsfesten Referenzpunkten oder Referenzpunkten, die an Körperteilen befestigt sind, aufgenommen und berechnet werden.

Zum Beispiel kann bei entsprechender Blickrichtung die Lage eines Instruments im Verhältnis zu einem Körperteil und/oder einem Referenzpunkt drei-dimensional eindeutig bestimmt werden, wenn mindestens 3 Marker fix zueinander auf dem Instrument angeordnet sind.

Derzeit werden sowohl Kugeln als auch flache Marker als retro-reflektierende Körper eingesetzt.

Flache Marker sind generell genauer als Marker Kugeln. Dies ergibt sich dadurch, dass bei der Herstellung von kugelförmigen retro-reflektierenden Körpern retro-reflektierende Folien eingesetzt werden. Die bekannten kugelförmigen retroreflektierenden Körper, die unter Verwendung von retro-reflektierenden Folien hergestellt werden, weisen bei Beleuchtung aus unterschiedlichen Richtungen unterschiedliche Reflexionseigenschaften auf, was sich nachteilig bei der Positionsbestimmung erweist.

Ein Nachteil der flachen Marker hingegen ist eine starke Einschränkung des Sichtbereichs bei seitlicher Beobachtung. Es ist zwar bekannt, einen Verbund von 4 flachen Markern zu verwenden, die winklig zueinander ausgerichtet sind, um die Vorteile der flachen Marker mit den Vorteilen der Marker Kugeln zu verbinden. Dies erfordert jedoch einen deutlich größeren Aufwand und hat wesentlich höhere Herstellungskosten zur Folge.

In den meisten Anwendungen werden daher kugelförmige, retro-reflektierende Körper eingesetzt.

Die US 3,964,820 beschreibt ein kugelförmiges retro-reflektierendes Element, welches einen Lichtstrahl retro-reflektiert, wenn Licht auf dessen teilkugelförmigen Oberflächenteil auftrifft. Auf der übrigen Oberfläche des Elements sind eine Vielzahl konkaver und reflektierender teilkugelförmiger kleiner Kugeln vorgesehen, welche Lichtstrahlen zurücksenden, die auf den teilkugelförmigen Oberflächenanteil des Elementes aufgetroffen sind und ins Innere des Elementes gebrochen wurden.

Die US 3,971,692 beschreibt ein retro-reflektierendes Material, welches durch eine Schicht transparenter Glaskugeln auf einem klebrigen Überzug hergestellt wird, der auf einem Trägerblatt ausgebildet ist, wobei die freiliegenden Teile der Kugeln mit einem reflektierenden Material, z.B. Aluminium, bestrichen werden und die bestrichenen Teile der Kugeln in einen klebrigen Belag eines Bauteils eingelassen werden, wobei anschließend die Trägerfolie zusammen mit dem klebrigen Überzug abgezogen wird.

Die US 4,265,938 beschreibt Retro-Reflektoren wie sie für Straßenschilder und Fahrzeugnummernschilder verwendet werden. Dabei wir die Oberfläche eines metallischen Substrats retro-reflektierend beschichtet, indem eine Schicht aus einem organischen Polymer und Glaskugeln angeklebt wird und das Substrat anschließend durch eine Walze geführt wird, wobei die Glaskugeln mit einem Tiegel bedeckt sind, so dass die Kugeln Vertiefungen in der metallischen Oberfläche erzeugen.

Die FR 2 706 045 beschreibt retro-reflektierende Scheiben und deren Herstellung, wobei die retro-reflektierenden Scheiben insbesondere für die Inspektion, die Messung, oder die Beobachtung einer Oberfläche eines Objektes verwendet werden. Auf einen metallischen Innenkörper der Scheibe wird ein erster reflektierender Überzug aufgebracht und auf die Oberfläche des ersten reflektierenden Überzugs wird ein zweiter Überzug mit Glaskügelchen aufgebracht.

Die EP 1 639 958 beschreibt die Herstellung eines retro-reflektierenden Markers, der im medizinischen Bereich bei Operationen eingesetzt wird. Eine hohle Kugel, bevorzugt aus Plastik, wird mit einer retro-reflektierenden Schicht überzogen, die aus einer Mischung von Glaskügelchen, Aluminium-, Gold- oder Silberpulver besteht, indem diese Mischung auf die Kugeloberfläche gesprüht oder gestrichen wird. Die Marker Kugeln können auf einem Halteelement befestigt werden.

Die WO 01/26574 beschreibt eine Plastikkugel mit einem Durchmesser von 10 mm bis 15 mm, die mit einer retro-reflektierenden Folie beklebt wird.

Die DE 100 29 529 beschreibt ein Reflektorsystem zur Positionsbestimmung von Instrumenten und Geräten, bevorzugt zur Bestimmung der Position eines medizinischen Instrumentes oder Gerätes, bei dem der Reflektor aus einer transparenten Kugel, welche teilweise entweder teildurchlässig oder ganz verspiegelt ist.

Die EP 1 640 750 beschreibt einen retro-reflektierenden Körper und die Herstellung eines solchen Körpers, der insbesondere im Medizinbereich für die Positionsbestimmung von chirurgischen Instrumenten eingesetzt wird. Der Körper, der z.B. eine kugelförmige Form aufweist, besteht aus einem Gemisch aus Plastik und reflektierend beschichteten Glaselementen. Der Körper wird in einem Spritzgussprozess geformt. Die reflektierend beschichteten Elemente stehen an der Oberfläche aus der Plastikmasse hervor. Die überstehenden, beschichteten Elemente werden durch einen Ätzprozess von der reflektierenden Oberfläche befreit. Nachteilig wirkt sich bei diesem Prozess aus, dass die beschichteten Glaselemente weder definiert orientiert, noch gleichmäßig aus der Plastikmasse hervortreten. Hierdurch wird die erreichbare Retro-Reflektivität, aber auch die homogene Verteilung der retro-reflektiven Glaselemente deutlich eingeschränkt.

Weiterer Stand der Technik ist aus JP 58 011902 A, US 4 416 509 A, US 3 365 790 A sowie JP 5 329882 A bekannt.

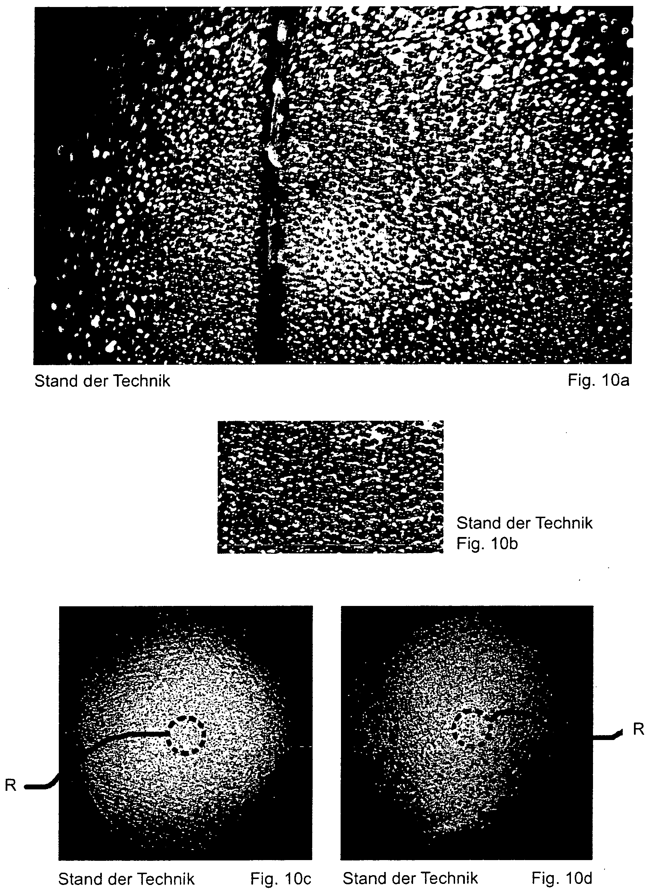

Figuren 10a, 10b, 10c und 10d zeigen verschiedene fotografische Aufnahmen eines kugelförmigen retro-reflektierenden Körpers im Stand der Technik, bei dem zwei Kugelhälften mit einer Folie bezogen und anschließend zusammengesetzt wurden. Die entlang einer kreisförmigen Linie verlaufende Fügekante der zwei Hälften wird im Folgenden als Äquator bezeichnet. Die beiden Punkte der Kugel, die von einer Gerade durchstoßen werden, welche senkrecht auf die Äquatorebene durch den Mittelpunkt der Äquatorebene verläuft, werden als Pole der Kugel bezeichnet. Figur 10c zeigt die Kugel aus einer Blickrichtung, die im Wesentlichen senkrecht auf einen Pol der Kugel steht. Figur 10d zeigt die Kugel aus einer Blickrichtung, die im Wesentlichen senkrecht auf einen Punkt im Äquatorbereich der Kugel steht. Die beiden fotografischen Aufnahmen wurden unter identischen Bedingungen aufgenommen, das heißt bei gleichem Abstand und gleicher Beleuchtung der Kugel. Anhand der Aufnahmen wird deutlich, dass die Kugel das Licht bei der Blickrichtung, die in Figur 10c dargestellt wird, deutlich besser reflektiert als einer Blickrichtung, die der fotografischen Aufnahme in Figur 10d zu Grunde liegt.

Figur 10b zeigt eine Vergrößerung der Kugeloberfläche im Bereich eines der Pole. Figur 10a zeigt eine Vergrößerung eines Ausschnitts der Kugeloberfläche im Bereich des Äquators. Bei diesen Bildern wurde die Belichtung angepasst, um die retroreflektierenden Glaselemente (Microspheres) besser erkennen zu können. In diesen Figuren ist ersichtlich, dass die retro-reflektiven Glaselementen im Polbereich näher beieinander liegen als im Äquatorbereich, was dazu führt, dass die Kugel bei der in Figur 10c dargestellten Blickrichtung besser reflektiert als bei einer Blickrichtung, die in der Äquatorialebene liegt.

Um den Unterschied der Reflexionseigenschaften zu quantifizieren kann der durchschnittliche Grauwert eines Oberflächenbereichs der Kugeln bestimmt werden. Um störende Einflüsse, wie z.B. eine Verschlechterung der Reflexionseigenschaften aufgrund einer im Verhältnis zur Oberfläche schräg verlaufenden Blickrichtung, z.B. durch Abschattung, zu vermeiden, können die Grauwerte jeweils in einem begrenzten gleichgroßen Referenzoberflächenbereich R ermittelt werden, der eine im Wesentlichen senkrecht zur Blickrichtung verlaufenden Oberflächenbereich umfasst. Die beispielhaft gewählten Referenzoberflächenbereiche R werden in den Figuren 10c und 10d jeweils durch strichpunktierte Linien begrenzt. Die Referenzoberflächenbereiche R können bei einem Kugeldurchmesser von etwa 12 mm in etwa einen Kreisdurchmesser von 1,6 mm aufweisen, was in etwa einer Oberfläche des Referenzoberflächenbereichs von ca. 2 mm² entspricht.

Der jeweils ermittelte Grauwert kann z.B. durch eine CCD Kamera ermittelt werden, bei der der ermittelte Grauwert eines Bildpunktes linear von der Menge des einfallenden Lichts abhängt, so dass über einen Vergleich der ermittelten Grauwerte ein genaues Verhältnis der Reflektionseigenschaften ermöglicht werden kann. Bei dem in den Figuren 10c und 10d dargestellten retro-reflektierenden Körper konnte eine relative Differenzreflexion der gewählten Referenzoberflächenbereiche R von 70% ermittelt werden, d.h. in einer Blickrichtung auf den kugelförmigen retroreflektierenden Körper, die in Figur 10d dargestellt ist, reflektiert der kugelförmige retro-reflektierende Körper lediglich 70% des Lichts verglichen mit der Blickrichtung aus Figur 10c.

Daraus wird ersichtlich, dass ein wichtiges Kriterium für die Güte von Markern der erreichte Rückstrahlwert ist, der auch in cd/lux/m² (Candela pro Lux pro Quadratmeter) ausgedrückt werden kann. Dieser sollte je nach Anwendung möglichst oberhalb von 300 cd/lux/m² liegen. Der Rückstrahlwert sollte möglichst gleichbleibend über die gesamte retro-reflektierende Oberfläche erreicht werden, so dass die Marker aus allen Raumrichtungen betrachtet ein einheitliches Reflexbild abgeben. In vielen Einsatzbereichen, z.B. im medizinischen Einsatz für die Positionierung von chirurgischen Instrumenten und Geräten, ist darüber hinaus ein möglichst großer seitlicher Betrachtungswinkel auf die Marker gewünscht.

Wege zur Bestimmung der quantitativen Retro-Reflexion einer zu bewertenden Oberfläche werden in der CIE Norm 054.2-2001 beschrieben. CIE steht als Abkürzung für die Internationale Beleuchtungskommission (auf Französisch "Commission Internationale de l'Eclairage"). Die CIE wurde Anfang des 20. Jahrhunderts gegründet. Die Organisation wird von der ISO als internationale Standardisierungskörperschaft anerkannt. Ferner sind auf dem Markt verschiedene Systeme zur normgerechten Messung der Retro-Reflexion erhältlich. In der Regel werden bei den Systemen digitale Bilder von den zu bewertenden Oberflächen unter definierten Beleuchtungssituationen aufgenommen. Dann wird über eine Software aus den digitalen Bildern eine durchschnittliche Helligkeit (z.B. ein Grauwert) eines Oberflächenbereichs der zu bewertenden Oberflächen bestimmt. Schließlich wird Reflexionseigenschaft des Oberflächenbereichs anhand der durchschnittlichen Helligkeit quantifiziert.

Die auf dem Markt erhältlichen Systeme sind in der Regel dazu bestimmt, die Reflexion größerer Flächen, z.B. von Verkehrsschildern, zu bestimmen, so dass die Eignung dieser Systeme für die Vermessung kleinerer Körper nicht oder zur eingeschränkt gegeben ist.

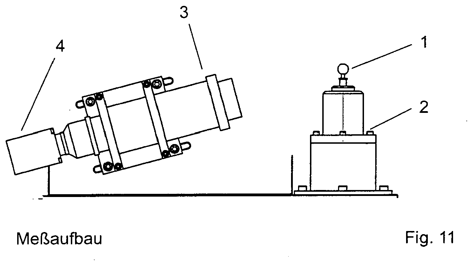

Im Folgenden wird daher mit Bezug auf Figur 11 eine Messanordnung beschrieben, mit der kleine Reflektorkörper, insbesondere kugelförmige retro-reflektierende Marker, auf die vorliegend als relevant erachteten Reflexionseigenschaften überprüft werden können. Diese in Figur 11 gezeigte Messanordnung wurde gegenüber der Anordnung, mit der die Aufnahmen der Figurenserie 10 aufgenommen wurden, weiter entwickelt. Mit der Messanordnung aus Figur 11 wurden die Bilder aufgenommen, die in den Figurenserien 12, und 13 dargestellt sind. Die korrespondierenden Messungen wurden an die CIE Norm 054.2-2001 angelehnt.

Die in Figur 11 gezeigte Messanordnung weist eine hochauflösende CCD Kamera 4 mit einem telezentrischen Objektiv 3 mit einer koaxialen Beleuchtungseinheit auf. Das Messobjekt 1 wird bei der Messanordung auf einem fest montierten Sockel 2 fixiert. Im Fall der Beurteilung von kugelförmigen retro-reflektierenden Markern, werden die Marker bei der Messanordung so fixiert, dass der Kugelmittelpunkt auf der optischen Achse des telezentrischen Objektivs 3 liegt. Der kugelförmige Marker kann um den Kugelmittelpunkt drehbar fixiert sein. Dann wird das Messobjekt 1 über die Beleuchtungseinheit 3 beleuchtet und von der CCD Kamera 4 aufgenommen. Die Aufnahme kann z.B. über eine sogenannte Machine Vision Software in Echtzeit oder über Bildverarbeitungsprogramme nachträglich ausgewertet werden.

Bei den durchgeführten Messungen an den Reflektorkörpern in Figurenserien 12 und 13 wurde jeweils über einen Durchmesser ein kreisförmiger Messpunkt als Referenzoberflächenbereich R definiert. Der Referenzoberflächenbereich R weist einen Durchmesser auf, der in etwa einem Achtel des Durchmessers des Markers entspricht.

Die Figurenserie 12 stellt Aufnahmen und Ausschnitte aus Aufnahmen dar, welche mit der beschriebenen Messanordnung von einem im Prioritätsintervall der vorliegenden Anmeldung auf dem Markt erhältlichen Marker aufgenommen wurden.

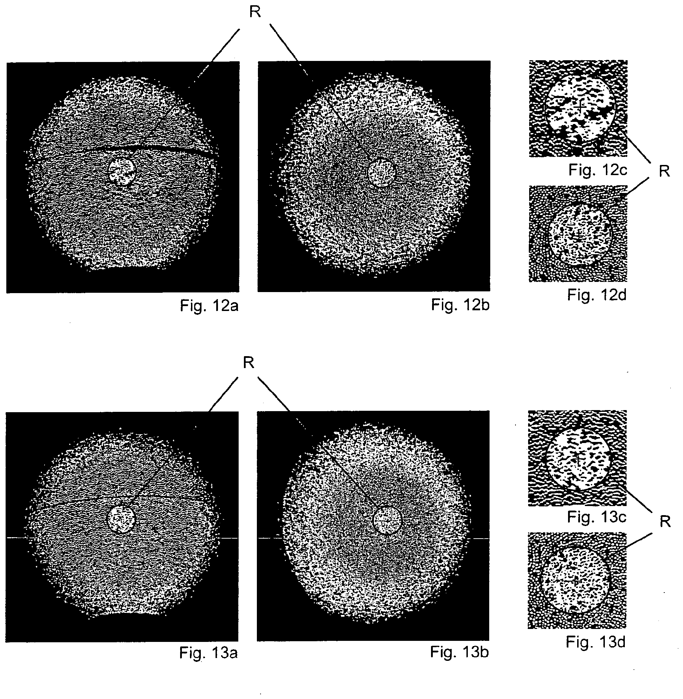

Figur 12a zeigt eine Aufnahme des Markers, bei der die Aufnahmerichtung auf einen Äquatorbereich des Markers gerichtet wurde. Der Äquator selber ist in Figur 12a als verhältnismäßig dunkle und somit schlecht reflektierende Linie zu erkennen. Diese Äquatorlinie wird durch den Fügebereich der beiden Kugelhälften gebildet, der aufgrund von Fertigungstoleranzen keine retro-reflektierende Oberfläche aufweist. Die auf den Kugelmittelpunkt des Markers gerichtete optische Achse der CCD Kamera 4 mit dem telezentrischen Objektiv 3 durchstößt die Kugeloberfläche bei der dargestellten Aufnahme im Äquatorbereich etwas neben der Äquatorlinie, wobei der Referenzoberflächenbereich an die Äquatorlinie angrenzend so gewählt wurde, dass die Äquatorlinie den Referenzoberflächenbereich gerade nicht schneidet, so dass eine Verfälschung des Messergebnisses durch nicht reflektierende Bereiche der Äquatorlinie vermieden wurde.

Der Referenzoberflächenbereich ist in der Figurenserie 12 als kreisförmiger Bereich erkennbar, der im Vergleich zur restlichen Kugeloberfläche mit einer angehobenen Helligkeit dargestellt ist. Diese angehobene Helligkeit entspricht nicht den realen Aufnahmen sondern wurde zu Zwecken der Veranschaulichung, also zur graphischen Hervorhebung des Referenzoberflächenbereichs, nachträglich in die Aufnahmen eingearbeitet. Den Messungen wurden die unveränderten Aufnahmen ohne diese angehobene Helligkeit zugrunde gelegt.

Der Durchmesser des Referenzoberflächenbereichs entspricht, wie oben erwähnt, in etwa einem Achtel des Kugeldurchmessers. Durch diese Wahl des Durchmessers können Einflüsse auf die Reflexionseigenschaften aufgrund der Oberflächenkrümmung so verringert werden, dass sie zu vernachlässigen sind.

Figur 12b zeigt eine Aufnahme des Markers, bei der die Aufnahmerichtung auf einen Polbereich des Markers gerichtet wurde.

Figur 12c zeigt eine Ausschnittsvergrößerung des Referenzoberflächenbereichs aus Figur 12a. Figur 12d zeigt eine Ausschnittsvergrößerung des Referenzoberflächenbereichs aus Figur 12b.

Die Helligkeitswerte der Referenzoberflächenbereiche aus der Figurenserie 12 wurden ermittelt. Dabei wurde ermittelt, dass der Rückstrahlwert in cd/lux/m² des Referenzoberflächenbereichs im Äquatorbereich zum Teil mehr als 30% unter dem Rückstrahlwert in cd/lux/m² des im Polbereich gemessenen Referenzoberflächenbereichs lag. Die relative Differenzreflexion betrug demnach weniger als 70 %.

Die Figurenserie 13 zeigt einen verbesserten Reflektorkörper, der unter identischen Messbedingungen aufgenommen wurde und der weiter unten in Bezug auf die detaillierte Figurenbeschreibung näher beschrieben wird.

Aus dem Dokument JP 05-329882 A ist eine Methode aus Tiefziehen und Spritzgießen zur Herstellung eines Verbundkörpers ohne Faltenbildung oder Brechen des Materials bekannt, wobei in einem Verfahren ein Verbundbogen aus einem metallischen Bogen und einem thermoplastischen Kunststoff mit einem Ring gegen eine Form gedrückt, ein Kunststoff in eine Kavität gespritzt und eine bewegliche Form mit einer gekrümmten Oberfläche geschlossen wird, während die Andruckkraft des Rings kontrolliert wird.

Aus dem Dokument JP 58-011902 A ist weiter ein halbkugelförmiges Reflexionsgerät bekannt, welches für Bojen oder für Helme für Fahrer von Motorrädern verwendet wird, umfassend eine Glaskugelreflektorplatte, in welcher durch einbettendes Bedecken von Glaskugeln auf der Oberfläche einer Grundplatte, welche aus einer Metallplatte besteht, eine Reflektionsschicht ausgebildet ist, und welches zu einer Halbkugelform ausgeformt ist, welche die Reflektionsschicht an der äußeren Umfangsfläche aufweist. Dabei wird eine Glaskugelreflektorplatte beschrieben, wobei bei dieser Reflektorplatte auf der Oberfläche einer Grundplatte, welche einfach plastisch umformbar ist und eine Spiegelfläche aufweist, wie eine Aluminiumplatte oder eine Blech- bzw. Weißblechplatte, über einen Grundierungsanstrich bzw. -lack eine Mehrzahl von Glaskugeln durch einen Klebstoff auf der gesamten Fläche einheitlich aufgeklebt ist, und die aufgeklebten Glaskugeln mit einem transparenten Schutzanstrich bzw. -lack bedeckt sind, um eine Reflektionsschicht auszubilden. Hierbei wird für den Grundierungsanstrich, den Klebstoff und den Schutzanstrich Vinyl-Material verwendet, welches gute Klebeigenschaften untereinander und mit den Glaskugeln aufweist, und zudem gute elastische Bearbeitbarkeit aufweist.

### Aufgabe

Ausgehend von dem vorgenannten Stand der Technik ist es die Aufgabe der Erfindung, einen Reflektorkörper bereit zu stellen, wobei der Reflektorkörper aus verschiedenen Richtungen betrachtet eine möglichst gleichmäßig retro-reflektierende Oberfläche mit einem guten Rückstrahlwert aufweist und kostengünstig und einfach herstellbar ist.

### Lösung

Die Aufgabe wird durch einen Reflektorkörper gemäß Anspruch 1 gelöst. Eine vorteilhafte Ausführungsform ist Gegenstand des abhängigen Anspruchs.

Gemäß der Erfindung weist ein Reflektorkörper, nämlich ein kugelförmiger retro-reflektierender Marker, zumindest drei Reflektorkörpersegmente auf, wobei jedes Reflektorkörpersegment eine Beschichtung aufweist, die eine Reflexionsfolie umfasst. Der Reflektorkörper ist aus drei oder mehr Reflektorkörpersegmenten zusammengesetzt. Die Reflektorkörpersegmente mit der Beschichtung können untereinander in lösbarer Weise oder in unlösbarer Weise, z.B. durch Verschweißen, insbesondere Ultraschallschweißen, Verkleben, durch Formschluss oder Reibschluss oder auf andere Art und Weise derart miteinander verbunden sein, dass die einzelnen Reflektorkörpersegmente eine im Wesentlichen durchgehende Reflexionsoberfläche aufweisen. Die Reflexionsoberflächen der Reflektorkörpersegmente ergänzen sich zu einer Reflexionsoberfläche des Reflektorkörpers, welche eine Kugelform aufweist.

"Beschichtung, die eine Reflexionsfolie umfasst", bezeichnet in diesem Zusammenhang eine Beschichtung, die bei der Herstellung des Reflektorkörpers unter Verwendung einer Reflexionsfolie erfolgt. Die Reflexionsfolie kann dabei auf einen Segmentgrundkörper aufgebracht werden. Der Segmentgrundkörper kann bereits vorgeformt sein. Zusätzlich zur eigentlichen Reflexionsfolie kann die Beschichtung weitere Schichten aufweisen, wie z.B. eine Klebeschicht, Schutzschichten oder ähnliches. Ferner kann z.B. eine Primärträgerschicht vorgesehen sein. Begrifflich zu trennen sind dabei vorliegend die Begriffe Trägermaterial und Primärträgerschicht. Als Trägermaterial wird vorliegend der Bestandteil der Reflexionsfolie bezeichnet, der folienartig flexibel ist. Der Begriff Primärträgerschicht hingegen bezeichnet eine separate Schicht auf die die Reflexionsfolie aufgebracht werden kann. Die Primärträgerschicht kann als im Wesentlichen selbsttragende also formstabile Schicht ausgebildet sein, auf welche die Reflexionsfolie mit dem Trägermaterial aufgebracht werden kann. Die Primärträgerschicht kann z.B. eine getrennt vorgeformte und anschließend mit der Reflexionsfolie überzogene Primärträgerschicht sein. Denkbar ist ferner, dass eine solche Primärträgerschicht zunächst mit der Reflexionsfolie überzogen und dann zusammen mit der Reflexionsfolie verformt wird. Die Primärträgerschicht kann eine im Wesentlichen formstabile Schicht z.B. aus einem Polymermaterial aufweisen. Der Begriff "Beschichtung, die eine Reflexionsfolie umfasst" beschreibt verschiedene Arten von "Beschichtungen" mit Reflexionsfolien, die durch unterschiedliche Herstellungsverfahren erfolgen können, z.B. durch Hinterspritzen einer Reflexionsfolie, wie im Folgenden in Bezug auf weitere Aspekte beschrieben wird. Denkbar ist ebenfalls, z.B. selbstklebende Reflexionsfolien auf bereits in fester Form vorliegende Reflektorkörpersegmentrohlinge aufzuziehen. Eine Beschichtung kann sowohl durch das Aufbringen einer Reflexionsfolie auf einen festen Körper als auch durch das Erzeugen eines festen Körpers hinter der Folie z.B. durch Hinterspritzen, Blasumformen o.a. erzeugt werden. Reflexionsfolien sind in verschiedenen Ausführungen und von verschiedenen Herstellern auf dem Markt erhältlich, z.B. unter dem Markennamen Scotchlite von der Firma 3M. Reflexionsfolien können z.B. textile Trägermaterialien, Trägermaterialien aus einer homogenen Schicht (z.B. aus einer Polymerfolie) oder andere Trägermaterialien aufweisen. Reflexionsfolien können selbstklebend ausgeführt sein. Auf dem Trägermaterial können Reflektorelemente vorgesehen sein, wie z.B. so genannte Microspheres. Microspheres sind Reflektorkugeln aus einem lichtdurchlässigen Material, die auf einer Seite eine reflektierende Schicht aufweisen. Denkbar sind auch Reflexionsfolien, bei denen die Reflektorelemente unmittelbar in die Reflexionsfolie eingearbeitet sind, z.B. als Tripelspiegel, prismatische retro-reflektierende Vertiefungen oder ähnliches.

Die Reflexionsfolie, mit der ein Reflektorkörpersegment beschichtet wird, kann im abgewickelten Zustand der Reflexionsfolie zunächst eine im Wesentlichen ebene Form aufweisen, also in Folienebene keine Streckungen aufweisen. Die Reflexionsfolie wird bei der Beschichtung der Reflektorkörpersegmente aus einer solchen ebenen Form in eine dreidimensional gewölbte Form verformt, wobei die Reflexionsfolie gedehnt bzw. gestreckt wird. Je stärker die Reflexionsoberfläche des Reflektorkörpersegments von der ebenen Form abweicht, desto stärker muss die Reflexionsfolie in bestimmten Bereichen gedehnt werden. Bei einer Dehnung der Reflexionsfolie entfernen sich die Reflektorelemente, die auf der Reflexionsfolie verteilt sind, voneinander, sodass aufgrund einer reduzierten Reflektorelementdichte auf der Reflexionsfolie die Reflexionseigenschaft des Reflektorkörpers in diesen Bereichen verschlechtert werden kann. Dabei kann bei einer Bespannung der Reflexionsfolie in unterschiedlichen Bereichen des Reflektorkörpersegments eine unterschiedlich starke Dehnung der Reflexionsfolie auftreten, sodass das Reflektorkörpersegment in unterschiedlichen Bereichen verschiedene Reflexionseigenschaften aufweist. Dabei wurde erkannt, dass bei einer Beschichtung eine Dehnung insbesondere in den Randbereichen des Reflektorkörpersegments auftritt, wodurch die Reflektorkörper im Bereich der Reflektorkörpersegmentgrenzen reduzierte Reflexionseigenschaften aufweisen, wodurch sich auf den gesamten Reflektorkörper ein ungleichmäßiges Reflexionsverhalten ergeben kann. Diese ungewünschten Effekte können bei einem Reflektorkörper gemäß dem ersten Aspekt verringert werden, weil bei der Herstellung jedes der zumindest drei Reflektorkörpersegmente eine geringere Dehnung der Reflexionsfolie erfolgt als bei der Herstellung einer Halbkugel. Daher weist bei einem derart hergestellten Reflektorkörper die Reflexionsfolie insbesondere in den Randbereichen der Reflexionsoberflächen der Reflektorkörpersegmente eine im Verhältnis zu den mittleren Bereichen geringere Dehnung auf.

Bei einem Aufbau des Reflektorkörpers können die Reflexionsoberflächen jedes der Reflektorkörpersegmente des Reflektorkörpers derart gestaltet sein, dass die Reflexionsfolie beim Aufbringen auf das Reflektorkörpersegment in keinem Referenzoberflächenbereich des Reflektorkörpersegments über eine bestimmte absolute Referenzdehnung und/oder über eine relative Referenzdehnung hinaus gedehnt wird. Bei einer Streckung der Reflexionsfolie kann die Dehnung in Mikrobereichen der Reflexionsfolie lokal unterschiedlich auftreten. Derartige lokale Unterschiede spielen bei der Anwendung der Reflektorkörper keine Rolle und sollen vernachlässigt werden. Daher wird für die Quantifizierung der Referenzdehnung ein begrenzter Referenzoberflächenbereich des Reflektorkörpersegments definiert. Eine Dehnung kann dann über einen Vergleich von Reflexionswerten unterschiedlicher Referenzoberflächenbereiche ermittelt werden. Der Begriff absolute Referenzdehnung bezeichnet in dem Zusammenhang eine Dehnung eines Referenzoberflächenbereichs des Reflektorkörpersegments im. Vergleich zur ungedehnten Reflexionsfolie. Relative Referenzdehnung bezeichnet eine Dehnung eines Referenzoberflächenbereichs des Reflektorkörpersegments im Vergleich zu einem beliebigen anderen Referenzoberflächenbereich des Reflektorkörpersegments. Als

Referenzoberflächenbereich kann z.B. ein kreisförmiger Oberflächenbereich mit einer Fläche von 2 mm² definiert werden.

Die Reflexionseigenschaften einer Reflexionsfolie können annähernd linear mit der flächenbezogenen Dehnung der Reflexionsfolie korrelieren, wenn man Effekte, wie eine Beschädigung der Folie oder eine Abschattung der Mikrokugeln bei schräg einfallendem Licht durch benachbarte Mikrokugeln vernachlässigt. Wird eine Folie z.B. auf die doppelte Fläche gedehnt, kann eine bestimmte Oberfläche der gedehnten Folie nur noch in etwa die Hälfte des Lichts retro-reflektieren, wie eine bestimmte Oberfläche der ungedehnten Folie.

Innerhalb eines Referenzoberflächenbereichs auf dem Reflektorkörpersegment kann die durchschnittliche Reflexion bestimmt und mit der Reflexion eines Referenzoberflächenbereichs einer ebenen, unverformten Reflexionsfolie oder mit der Reflexion eines anderen Referenzoberflächenbereichs auf dem Reflektorkörpersegment verglichen werden. Die Bestimmung der durchschnittlichen Reflexion kann z.B. mittels einer fotografischen Aufnahme des Referenzoberflächenbereichs erfolgen, wobei anhand des Bildes ein durchschnittlicher Grauwert im Referenzoberflächenbereich ermittelt werden kann. Bei der Aufnahme von verschiedenen Referenzoberflächenbereichen unter annähernd kollinearer Beleuchtung und unter im Wesentlichen identischen Bedingungen können die ermittelten Grauwerte miteinander verglichen werden.

Zur Ermittlung der Reflexion wird der Referenzoberflächenbereich in einem Bereich des Reflektorkörpersegments gewählt, an dem das eingestrahlte Licht im Wesentlichen senkrecht auf die Reflexionsoberfläche fällt, um Einflüsse, wie z.B. eine mögliche Abschattung, möglichst auszuschalten oder zumindest zu verringern.

Durch den Vergleich der Reflexion des Referenzoberflächenbereichs auf dem Reflektorkörpersegment mit der Reflexion eines Referenzoberflächenbereichs auf der unverformten Reflexionsfolie kann ein Wert einer absoluten Differenzreflexion ermittelt werden. Durch den Vergleich der Reflexion des Referenzoberflächenbereichs auf dem Reflektorkörpersegment mit der Reflexion eines anderen Referenzoberflächenbereichs auf dem Reflektorkörpersegment kann ein Wert einer relativen Differenzreflexion ermittelt werden.

Gemäß einem Aspekt kann bei einem Reflektorkörper ein absoluter Wert der Differenzreflexion erzielt werden, der an jeder Stelle der Reflexionsoberfläche des Reflektorkörpers deutlich über dem absoluten Wert der Differenzreflexion liegt, der bei der Bespannung von Halbkugeln erzielt werden kann. Bei der Bespannung von Halbkugeln kann der absolute Wert der Differenzreflexion gemittelt über die gesamte Halbkugeloberfläche in etwa bei 50 % liegen, da eine kreisförmige Fläche der unverformten Folie mit dem Durchmesser der fertigen Kugel eine Kugelhälfte überspannen muss also auf die doppelte Fläche gedehnt werden müsste. Da die Dehnung nicht in allen Bereichen gleich ausfallen wird, werden Bereiche sogar eine absolute Differenzreflexion von weniger als 50% aufweisen, also weniger als 50 % des Lichts reflektieren als eine unverformte Folie. Bei der Beschichtung von Reflektorkörpersegmenten, mit einer kleineren Teilfläche einer Kugeloberfläche gemäß dem ersten Aspekt kann die erforderliche Dehnung deutlich reduziert werden, so dass Reflektorkörper bereit gestellt werden können, die in keinem Bereich der Reflexionsoberfläche eine absolute Differenzreflexion von weniger als 55 % aufweisen oder sogar eine Differenzreflexion von 60 % oder 65 %.

Auch der Wert der relativen Differenzreflexion kann deutlich verbessert werden. Gemäß einem Aspekt können z.B. Reflektorkörper geschaffen werden, bei denen kein Referenzoberflächenbereich im Vergleich zu einem beliebigen anderen Referenzoberflächenbereich eine relative Differenzreflexion von weniger als 85 % aufweisen. Die am schwächsten reflektierenden Bereiche können demnach immer noch einen Differenzreflexionswert von 85 % des am besten reflektierenden Bereichs erreichen. Je nach Gestaltung der Reflektorkörpersegmente können auch Differenzreflexionswerte von 90 % und darüber erhalten werden.

Bei der Erfindung weist der Reflektorkörper eine im Wesentlichen kugelförmige Reflexionsoberfläche auf. "Im Wesentlichen kugelförmige Reflexionsoberfläche" bezeichnet in diesem Zusammenhang eine Oberflächenform, die nur mit herkömmlichen Herstellungstoleranzen von einer idealen mathematischen Kugelform abweicht. Ferner kann ein solcher Reflektorkörper eine Adapteraufnahme aufweisen, sodass die Kugelform der Reflexionsoberfläche im Bereich der Adapteraufnahme nicht gegeben ist. Auch ein Reflektorkörper mit einer Adapteraufnahme soll als Reflektorkörper mit einer im Wesentlichen kugelförmigen Reflexionsoberfläche angesehen werden. Bei einer weiteren Ausführungsform eines solchen Reflektorkörpers kann der Reflektorkörper zwei Halbkugelelemente aufweisen, wobei ein Halbkugelelement zumindest ein Reflektorkörpersegment und das andere Halbkugelelement zumindest zwei Reflektorkörpersegmente aufweist.
Denkbar ist, z.B. dass ein solcher Reflektorkörper z.B. zwei Halbkugelelemente aufweist, welche jeweils aus genau zwei oder genau drei Reflektorkörpersegmenten aufgebaut sind. Diese Ausführungsformen stellen einen Kompromiss zwischen einer geringen Teilezahl und einer geringen Oberflächenwölbung der einzelnen Reflektorkörpersegmente dar, sodass nur eine geringfügige Dehnung der Reflexionsfolie auf den Reflektorkörpersegmenten auftritt.
Gemäß der Erfindung weist der Reflektorkörper weiter ein kugelsegmentförmiges Basissegment mit einer Adapteraufnahme auf, wobei das Basissegment zumindest ein Reflektorkörpersegment umfasst, und wobei der Reflektorkörper ferner zumindest zwei weitere Reflektorkörpersegmente aufweist, welche das kugelsegmentförmige Basissegment zur Kugelform ergänzen. Das Basissegment weist einen im wesentlichen zylindrischen Haltebereich auf, der mit teilzylindrischen Ausnehmungen der anderen Reflektorkörpersegmente korrespondiert, so dass die Reflektorkörpersegmente in einfacher Weise auf das Basissegment aufgebracht werden können.

Dabei kann die Kugelsegmentoberfläche des Basissegments einen kleineren Reflexionsoberflächenbereich aufweisen als eine Halbkugel. Das Basissegment kann eine Kugelsegmentform aufweisen, die im Wesentlichen dem kleineren Kugelsegment entspricht, das durch einen außermittigen Schnitt einer Ebene mit einer Kugel gebildet wird. Die Adapteraufnahme kann mittig in diesem Kugelsegment angeordnet sein. Die weiteren Reflektorkörpersegmente unterscheiden sich vom Basissegment und können im Wesentlichen identisch zueinander ausgebildet sein. Grundsätzlich können zusätzlich zum Basissegment zwei, drei, vier oder n weitere Reflektorkörpersegmente vorgesehen werden. Wenn ein derartiger Reflektorkörper zusätzlich zum Basissegment genau drei weitere Reflektorkörpersegmente aufweist, kann einerseits die Teilezahl und damit die Stoßkanten zwischen Reflektorkörpersegmenten gering gehalten werden und zum anderen können die Reflektorkörpersegmente so gestaltet sein, dass nur eine geringfügige Dehnung der Reflexionsfolie auftritt.
Bei einer weiteren Ausführungsform eines solchen Reflektorkörpers können die Reflektorkörpersegmente durch Formschluss und/oder durch Reibschluss und/oder durch Verkleben und/oder durch Verschweißen miteinander verbunden sein.
Ein Formschluss kann z.B. in Form eines Clipverschlusses bereitgestellt werden. Ein Clipverschluss kann als zerstörungsfrei nicht lösbarer Ciipverschluss ausgeführt sein. Eine Kombination der Verbindungsarten ist denkbar. Z.B. können zunächst zwei oder mehr Reflektorkörpersegmente miteinander verklebt werden und anschließend kann das Basissegment eingeclipst werden. Andere Ausführungsformen sind ebenfalls denkbar.

Die folgenden weiteren Aspekte weisen die folgenden technischen Effekte auf. Ein weiterer Aspekt betrifft ein Verfahren zum Herstellen eines Reflektorkörpersegments, insbesondere eines Reflektorkörpersegments für die Herstellung eines kugelförmigen retro-reflektierenden Reflektorkörpers, im Spritzgussverfahren umfassend die Schritte:
- Bereitstellen einer Spritzgussform mit einem Anlageelement, welches eine Anlagefläche aufweist, welche eine Kavität der Spritzgussform in einem Bereich begrenzt, und einer Einspritzmündung,
- Bereitstellen einer Reflexionsfolie in der Kavität zwischen Einspritzmündung und Anlagefläche und
- Hinterspritzen der Reflexionsfolie durch Einspritzen von Spritzgussmaterial durch die Einspritzmündung in die Kavität.

Ein derart hergestelltes Reflektorkörpersegment kann durch weitere Reflektorkörpersegmente ergänzt zu einem Reflektorkörper insbesondere zu einem kugelförmigen retro-reflektierenden Marker ergänzt werden. Insbesondere eignet sich das Verfahren zur Herstellung von Reflektorkörpersegmenten für einen Reflektorkörper gemäß der Erfindung. Das Verfahren kann aber auch zur Herstellung von anderen, z.B. halbkugelförmigen Reflektorkörpersegmenten für andere Marker eingesetzt werden. Denkbar ist ebenfalls dass ein derartig hergestelltes Reflektorkörpersegment ohne weitere Segmente als einstückiger Marker mit nur einem Segment eingesetzt wird.

Mit Kavität wird der formgebende Raum innerhalb der Spritzgussform bezeichnet, in den das Spritzgussmaterial eingespritzt wird. Die Spritzgussform kann verschiedene zueinander bewegliche Teile aufweisen, welche jeweils verschiedene Wandflächen aufweisen. Die Kavität kann von verschiedenen derartigen Wandflächen definiert werden. Ein Öffnen der Form durch Auseinanderbewegen der verschiedenen zueinander beweglichen Teile ermöglicht ein Auswerfen des gespritzten Spritzgussteils. Die Wandflächen der beweglichen Teile weisen im Wesentlichen die negative Oberflächenform auf, die der positiven Oberflächenform des im Spritzgussverfahren herzustellenden Refiektorkörpersegments entspricht. Eines der beweglichen Teile, das Anlageelement, kann eine Wandfläche oder einen Teil der Wandfläche aufweisen, welche vorliegend als Anlagefläche bezeichnet wird. Die gesamte Anlagefläche kann als eine durchgehende Fläche durch die Wandfläche eines einzelnen Anlageelements definiert werden. Denkbar ist ebenfalls, dass mehrere Anlageelemente vorgesehen sind, welche Wandflächen aufweisen, welche sich zu der Anlagefläche ergänzen. Die Anlagefläche als ein Bereich der Wandfiächen der Spritzgussform kann im Wesentlichen derart gestaltet und bereitgestellt werden, dass die Anlagefläche dem reflektierenden Bestandteil der Oberfläche des herzustellenden Refiektorkörpersegments, also der Reflexionsoberfläche des Refiektorkörpersegments entspricht oder die Reflexionsoberfläche umfasst. Die Anlagefläche und somit im Wesentlichen die Reflexionsoberfläche des herzustellenden Refiektorkörpersegments kann eben oder dreidimensional gekrümmt ausgeführt werden. Wenn ein Reflektorkörpersegment zur Herstellung eines kugelförmigen retro-reflektierenden Markers erzeugt werden soll, kann die Anlagefläche oder ein Teil der Anlagefläche die Oberflächenform eines negativen Kugeloberflächensegments, z.B. einer Halbkugel, aufweisen. Weitere denkbare Oberflächenformen ergeben sich aus den vorstehend gemachten Ausführungen hinsichtlich der möglichen Gestaltung der Reflektorkörpersegmente.

Durch das beschriebene Verfahren können auch Reflexionsfolien verwendet werden, die keine selbstklebende Rückseite aufweisen. Durch dieses Verfahren kann ein Beschichtungsschritt der Reflektorkörpersegmente vermieden werden. Hierdurch wird das Herstellungsverfahren für retro-reflektierende Marker vereinfacht. Durch die hohen Drücke im Spritzgussverfahren, kann die erzeugte Form des Reflektorkörpersegments, insbesondere der Reflexionsoberfläche des Reflektorkörpersegments, mit geringen Toleranzen an die gewünschte Oberflächenform angepasst werden. Dabei hat sich überraschend gezeigt, dass die Reflexionseigenschaften der als empfindlich geltenden auf dem Markt erhältlichen Reflexionsfolien durch die mechanische und thermische Beanspruchung des Spritzgussverfahrens nicht oder nur geringfügig beeinträchtigt werden.

Durch das Hinterspritzen kann z.B. ein Segmentgrundkörper des Reflektorkörpersegments hinter der Reflexionsfolie erzeugt werden, der sich mit der Reflexionsfolie verbindet. Auch ursprüngliche Bedenken hinsichtlich einer zu hohen thermischen Beanspruchung des Trägermaterials der Reflexionsfolie, welche zu einer ungleichmäßigen Dehnung oder einem Durchschmelzen der Reflexionsfolie hätten führen können haben sich wider Erwarten als unbegründet erwiesen. Ein Hinterspritzen kann daher durch Einspritzen von Spritzgussmaterial durch eine oder mehrere Einspritzmündungen unmittelbar hinter die Reflexionsfolie in deren noch unverformten, ebenen Zustand erfolgen. Ein weiterer Vorteil des Verfahrens ist, dass es nicht erforderlich ist die Reflexionsfolie, die in der Kavität bereit gestellt wird, durch Inkontaktbringen der Folie mit einem festen, formgebenden Körper und Hineindrücken des festen Körpers in die Folie zu verformen. Vielmehr kann die Reflexionsfolie z.B. durch Einspritzen des flüssigen Spritzgussmaterials oder durch Einblasen von Druckluft etc. verformt werden. Hierdurch treten bei der Verformung der Reflexionsfolie keine seitlich wirkenden Reibungskräfte gegenüber einem solchen festen formgebenden Körper auf. Derartige seitlich wirkenden Reibungskräfte können bei herkömmlichen Verfahren beim Hineindrücken des festen Körpers in die Folie über den Eindrückweg hinweg zu unterschiedlichen Spannungen in der Folie und somit zu unterschiedlichen Dehnungsbeträgen in der Folie führen. Bei einem Verformen der Reflexionsfolie durch Einspritzen des Spritzgussmaterials oder durch Einblasen von Druckluft vor dem Einspritzschritt hingegen, kann über die gesamte Fläche der Reflexionsfolie innerhalb der Kavität ein gleichmäßiger Druck auf die Folie aufgebracht werden, so dass sich unterschiedliche Bereiche im Wesentlichen gleichmäßig dehnen. Ein in diesem Verfahren hergestelltes Reflektorkörpersegment, weist daher über verschiedene Bereiche der Reflexionsoberfläche hinweg eine gleichmäßigere Dehnung der Reflexionsfolie auf als herkömmliche Marker und somit ein verbessertes Reflexionsverhalten.

Mit dem Verfahren können z.B. Reflektorkörpersegmente geschaffen werden, bei denen kein Referenzoberflächenbereich im Vergleich zu einem beliebigen anderen Referenzoberflächenbereich eine relative Differenzreflexion von weniger als 85 % aufweisen. Die am schwächsten reflektierenden Bereiche können demnach immer noch einen Differenzreflexionswert von 85 % des am besten reflektierenden Bereichs erreichen. Je nach Gestaltung der Reflektorkörpersegmente können auch Differenzreflexionswerte von 85 %, 88 %, 91 % oder sogar über diesen Werten liegende Differenzreflexionswerte erhalten werden.

Gemäß einer Abwandlung eines solchen Verfahrens kann der Schritt des Bereitsteilens einer Spritzgussform mit einem Anlageelement, welches eine Anlagefläche aufweist, den Schritt des Bereitstellens des Anlageelements mit einer abgerundeten Kante im Randbereich der Anlagefläche umfassen.

Hierdurch wird eine Beschädigung oder Abreißen der Reflexionsfolie verhindert und/oder ein sanftes Nachgleiten der Reflexionsfolie in die Kavität ermöglicht. Bei einer Ausführungsform des Verfahrens kann die Abrundung mit einem Krümmungsradius der Kante von zumindest 10 mm bemessen sein.

Bei einer anderen Abwandlung eines solchen Verfahrens kann der Schritt des Bereitstellens einer Spritzgussform mit einem Anlageelement, ferner das Bereitstellen eines Kantenelements mit einer abgerundeten Kante umfassen, wobei das Kantenelement im Randbereich der Anlagefläche des Anlageelements vorgesehen ist und relativ zum Anlageelement beweglich ist.

Das Kantenelement kann in Einspritzrichtung hinter der Reflexionsfolie angeordnet sein. Auch durch diesen Verfahrensschritt kann durch die abgerundete Kante eine Beschädigung oder ein Abreißen der Reflexionsfolie verhindert und/oder ein sanftes Nachgleiten der Reflexionsfolie in die Kavität ermöglicht werden. Bei einer Ausführungsform des Verfahrens kann die Abrundung mit einem Krümmungsradius der Kante von zumindest 10 mm bemessen sein. Durch die bewegliche Bereitstellung des Kantenelements kann das Kantenelement z.B. nach Ende des Einspritzvorgangs aus dem Randbereich entfernt werden, so dass ein Auswerfen des Reflektorkörpersegments aus der Form ermöglicht oder erleichtert wird. Ein Entfernen des Kantenelements aus dem Randbereich kann durch ein Auseinanderziehen eines z.B. zweiteilig oder mehrteilig vorgesehenen Kantenelements in seitlicher Richtung erfolgen oder durch ein Abheben des Kantenelements von dem Anlageelement. In dem letzteren Fall kann das Kantenelement auch einteilig vorgesehen werden. Durch ein solches Abheben des Kantenelements kann der Teil der Reflexionsfolie, welcher außerhalb der Reflexionsoberfläche noch an dem Reflektorkörpersegment hängt zum Abreißen gebracht werden, so dass ein weiterer Herstellungsschritt des Abschneidens der Reflexionsfolie eingespart werden kann.

Bei einer weiteren Abwandlung eines solchen Verfahrens kann der Schritt des Bereitstellens einer Spritzgussform mit einem beweglichen Kantenelement derart erfolgen, dass das Kantenelement zwischen einer Einspritzposition und einer Ausstoßposition beweglich ist, wobei der Randbereich der Anlagefläche in der Einspritzposition von dem Kantenelement in Form einer Hinterschneidung zumindest teilweise überdeckt wird und wobei der Randbereich der Anlagefläche in der Ausstoßposition frei von Überschneidungen durch das Kantenelement sind, wobei das Verfahren ferner folgende Schritte umfasst:
- Bereitstellen oder Verbringen des Kantenelements in der Einspritzposition vor dem Schritt des Einspritzens von Spritzgussmaterial,
- Verbringen des Kantenelements in eine Ausstoßposition nach dem Schritt des Einspritzens von Spritzgussmaterial und
- Ausstoßen des Reflektorkörpersegments.

Gemäß einer weiteren Abwandlung eines solchen Verfahrens kann vor dem Schritt des Einspritzens von Spritzgussmaterial ferner folgenden Schritt erfolgen:
- Beaufschlagen der Einspritzseite der Reflexionsfolie mit Druck derart, dass sich die Reflexionsfolie in Richtung der Anlagefläche wölbt.

Das Beaufschlagen der Einspritzseite der Reflexionsfolie mit Druck kann entweder durch Vergrößern des Drucks auf der Einspritzseite erfolgen, z.B. durch Einblasen von Druckluft auf der Einspritzseite, oder durch Verringern des Drucks auf der Anlageseite, z.B. durch Absaugen der Luft auf dieser Seite. Ein Verringern des Drucks auf der Anlageseite kann durch Bereitstellung von Absaugkanälen in der Spritzgussform erfolgen und/oder durch Bereitstellung der Anlagefläche der Spritzgussform oder von Bereichen der Anlagefläche aus einem porösen oder mikroporösen Werkstoff, dessen Poren eine Größe aufweisen, die sich nicht negativ auf die Oberflächenbeschaffenheit des Reflektorkörpersegments auswirken, die aber groß genug sind, dass Luft über die Poren abgesaugt werden kann. Das Beaufschlagen der Einspritzseite der Reflexionsfolie mit Druck kann derart erfolgen, dass die Reflexionsfolie vor dem Einspritzen vorgewölbt oder vollständig in Anlage mit der Anlagefläche gebracht wird. Der Druck in der Kavität kann bis zum Beginn oder bis zum Ende des Schrittes des Hinterspritzens aufrechterhalten werden.

Gemäß einer Abwandlung eines solchen Verfahrens kann der Schritt des Bereitstellens einer Reflexionsfolie in der Kavität derart erfolgen, dass die Reflexionsfolie mit Bereichen unterschiedlicher Dehnfestigkeit bereitgestellt wird.

Beim Einwölben der Reflexionsfolie aus dem ebenen Zustand in Richtung der Anlagefläche, also z.B. beim Hinterspritzen und/oder beim Beaufschlagen der Einspritzseite der Reflexionsfolie mit Druck, können sich in verschiedenen Bereichen der Reflexionsfolie unterschiedliche Spannungen ausbilden, die zu einer unterschiedlichen Dehnung der Reflexionsfolie in unterschiedlichen Bereichen führen können. Dieser Effekt kann durch Bereitstellen der Reflexionsfolie mit Bereichen unterschiedlicher Dehnfestigkeit verringert oder ausgeglichen werden. Dazu kann eine Reflexionsfolie mit einem Trägermaterial verwendet werden, das unterschiedliche Materialdicken und daher Bereiche unterschiedlicher Dehnfestigkeit aufweist. Ferner ist denkbar, dass die Reflexionsfolie in einem weiteren Schritt vor dem Hinterspritzen auf eine Primärträgerschicht aufgebracht wird. Begrifflich zu trennen sind vorliegend die Begriffe Trägermaterial und Primärträgerschicht. Das Trägermaterial ist Bestandteil der Reflexionsfolie und entsprechend flexibel. Der Begriff Primärträgerschicht hingegen bezeichnet eine separate Schicht auf die die Reflexionsfolie aufgebracht werden kann. Die Primärträgerschicht kann als im Wesentlichen selbsttragende also formstabile Schicht ausgebildet sein, auf welche die Reflexionsfolie mit dem Trägermaterial aufgebracht werden kann. Eine solche Primärträgerschicht, auf welche die Reflexionsfolie aufgebracht wird, kann z.B. eine PVC-Schicht (Schicht aus Polyvinylchlorid) mit einer Stärke von 0,2 mm bis 4 mm sein. Die Primärträgerschicht kann auch aus einem anderen Material bestehen. Eine Primärträgerschicht, auf welche die Reflexionsfolie aufgebracht wird, kann auch eine Trägerschicht sein, die in einem Verfahren verwendet wird, das nachfolgend mit Bezug auf einen nochmals weiteren Aspekt beschrieben wird und die gemäß dem oben genannten weiteren Aspekt im Spritzgussverfahren hinterspritzt wird. Die Primärträgerschicht kann Bereiche unterschiedlicher Dehnfestigkeit aufweisen, so dass auch der Verbund mit der Reflexionsfolie Bereiche unterschiedlicher Dehnfestigkeit aufweist. Bereiche unterschiedlicher Dehnfestigkeit der Primärträgerschicht können, wie zuvor in Bezug auf das Trägermaterial beschrieben, durch unterschiedliche Materialdicken der Primärträgerschicht erzeugt werden. Ferner ist denkbar, dass Bereiche unterschiedlicher Dehnfestigkeit durch eine Kombination unterschiedlicher Materialdicken der Primärträgerschicht und des Trägermaterials erzeugt werden.

Eine weitere Abwandlung eines solchen Verfahrens kann ferner folgenden Schritt umfassen:
- Fixieren der Reflexionsfolie umfänglich um die Anlagefläche herum derart, dass beim Einwölben der Reflexionsfolie in die Kavität hinein Material der Reflexionsfolie von außerhalb des Randbereichs der Anlagefläche in den Bereich innerhalb des Randbereichs der Anlagefläche nachfließen kann.

Das Fixieren kann durch Einklemmen der Reflexionsfolie zwischen einem einspritzseitigen Andruckbereich und einem anlageseitigen Andruckbereich der beweglichen Teile der Spritzgussform erfolgen. Die Andruckbereiche können als Bereiche von beweglichen Teilen der Spritzgussform ausgebildet sein. Die Andruckbereiche können beim Schließen der Form aufeinander zu bewegt werden und so die Reflexionsfolie fixieren. Das Fixieren kann derart erfolgen, dass ein Nachfließen bzw. Nachrutschen von Reflexionsfolie zwischen einem einspritzseitigen Andruckbereich und einem anlageseitigen Andruckbereich ermöglicht und/oder gezielt gesteuert werden kann. Dazu können die Andruckbereiche umfänglich so weit vom Randbereich der Anlagefläche entfernt vorgesehen werden, dass die Reflexionsfolie innerhalb der Andruckbereiche von außerhalb des Randbereichs der Anlagefläche in den Bereich innerhalb des Randbereichs der Anlagefläche nachfließen kann. Durch das Nachrutschen oder Nachfließen der Reflexionsfolie kann eine ungleichmäßig oder ungewünscht starke Dehnung der Reflexionsfolie im Bereich der Anlagefläche verringert oder vermieden werden.

Bei einer Abwandlung eines solchen Verfahrens kann der Schritt des Bereitstellens einer Reflexionsfolie durch Bereitstellen einer Reflexionsfolie mit einem Trägermaterial aus einem Polymermateria! erfolgen, das beim Hinterspritzen der Reflexionsfolie mit Polymermaterial zumindest zum Teil mit dem eingespritzten Polymermaterial verschmilzt.

Eine weitere Abwandlung eines solchen Verfahrens kann als kontinuierliches oder halbkontinuierliches Verfahren derart ausgestaltet sein, dass nacheinander mehrere Reflektorkörpersegmente hergestellt werden, wobei nach jedem Schritt des Hipterspritzens ein weiterer Bereich eines kontinuierlich bereitgestellten Reflexionsfolienmaterials in die Kavität nachgefördert wird. Das kontinuierlich bereitgestellte Reflexionsfolienmaterial kann in Form eines Streifens bereitgestellt werden, der nach jedem Einspritzen schrittweise nachgefördert wird, so dass in der Kavität, ein neuer Abschnitt der Folie für den nächsten Einspritzschritt bereit gestellt werden kann.

Ein nochmals weiterer Aspekt betrifft ein Verfahren zum Herstellen eines Reflektorkörpersegments, insbesondere eines Reflektorkörpersegments für die Herstellung eines kugelförmigen retro-reflektierenden Markers, in einem Umformverfahren, z.B. in einem Blasformverfahren, Tiefziehverfahren oder einem ähnlichen Verfahren, umfassend die Schritte:
- Aufbringen einer Reflexionsfolie auf eine Trägerschicht,
- Bereitstellen einer Umform-Form mit einer Umformfläche, welche die Umform-Form in einem Bereich begrenzt,
- Bereitstellen der Trägerschicht zusammen mit der darauf aufgebrachten Reflexionsfolie neben der Umformfläche,
- plastisches Umformen der Trägerschicht zusammen mit der darauf aufgebrachten Reflexionsfolie bis die Trägerschicht zusammen mit der darauf aufgebrachten Reflexionsfolie auf einer Seite im Wesentlichen die Form der Umformfläche angenommen hat.

Auch ein derart hergestelltes Reflektorkörpersegment kann durch weitere Reflektorkörpersegmente ergänzt zu einem Reflektorkörper insbesondere zu einem kugelförmigen retro-reflektierenden Marker ergänzt werden. Insbesondere eignet sich das Verfahren zur Herstellung von Reflektorkörpersegmenten für einen Reflektorkörper gemäß der Erfindung. Das Verfahren kann aber auch zur Herstellung von anderen, z.B. halbkugelförmigen Reflektorkörpersegmenten für andere Marker eingesetzt werden. Denkbar ist ebenfalls dass ein derartig hergestelltes Reflektorkörpersegment ohne weitere Segmente als einstückiger Marker mit nur einem Segment eingesetzt wird.

Gemäß dem nochmals weiteren Aspekt können z.B. Reflektorkörpersegmente geschaffen werden, bei denen kein Referenzoberflächenbereich im Vergleich zu einem beliebigen anderen Referenzoberflächenbereich eine relative Differenzreflexion von weniger als 85 % aufweisen. Die am schwächsten reflektierenden Bereiche können demnach immer noch einen Differenzreflexionswert von 85 % des am besten reflektierenden Bereichs erreichen. Je nach Gestaltung der Reflektorkörpersegmente können Differenzreflexionswerte von 87 %, 90% oder sogar über diesen Werten liegende Differenzreflexionswerte erhalten werden.

Die Umformfläche kann als Anlagefläche ausgestaltet sein, wie vorstehend in Bezug auf die anderen Aspekte beschreiben. Die Umformfläche kann auch auf der Seite der Trägerschicht als Kernformoberfläche einer Kernform bereitgestellt werden, wobei die Kernformoberfläche z.B. in Form einer konvexen, insbesondere einer halbkugelförmigen Erhebung vorgesehen werden kann. Die Kernformoberfläche kann eine um die Schichtdicke des herzustellenden Reflektorkörpersegments verringerte Größe aufweisen.

Zusätzlich zur Kernformoberfläche kann auf der Seite der Reflexionsoberfläche zusätzlich eine Kavität mit einer Anlagefläche bereitgestellt werden, wie vorstehend in Bezug auf den weiteren Aspekt beschrieben wurde. Denkbar ist jedoch ebenfalls die Umformfläche nur auf der Seite der Trägerschicht ohne zusätzliche Anlagefläche auf der Seite der Reflexionsoberfläche vorzusehen.

Das plastische Umformen kann durch Aufbringen von Druck auf die der Anlagefläche gegenüberliegende Seite der Trägerschicht und/oder durch Anlegen eines Unterdrucks auf der Seite der Anlagefläche erfolgen.

Der Schritt des plastischen Umformens kann ferner zusätzlich oder alternativ zum Beaufschlagen mit Druck/Unterdruck durch Eindrücken der Kernform in die der Reflexionsoberfläche gegenüberliegende Seite der Trägerschicht erfolgen.

Wenn zusätzlich zur Kernform die Anlagefläche vorgesehen ist, kann das Eindrücken der Kernform in die Trägerschicht derart erfolgen, dass die Reflexionsoberfläche in Anlage mit der Anlagefläche gebracht wird.

Das plastische Umformen kann durch Erwärmung der Trägerschicht unterstützt werden.

Die Reflexionsfolie kann z.B. ein Trägermaterial mit darauf angeordneten Microspheres umfassen. Dabei ist, wie vorstehend ausgeführt, der Begriff Trägermaterial von den Begriffen Primärträgerschicht und auch von dem Begriff Trägerschicht zu unterscheiden. Der Begriff Trägerschicht bezeichnet eine separate Schicht auf welche die das Trägermaterial umfassende Reflexionsfolie aufgebracht werden kann. Die Trägerschicht kann eine im Wesentlichen selbsttragende also formstabile Schicht sein, die zusammen mit der Reflexionsfolie umgeformt wird und anschließend ihre umgeformte Form bis zur Weiterverarbeitung oder unter Gebrauchsbedingungen des Reflektorkörpers beibehält. Eine solche Trägerschicht, auf welche die Reflexionsfolie aufgebracht wird, kann z.B. eine PVC-Schicht (Schicht aus Polyvinylchlorid) mit einer Stärke von 0,2 mm bis 4 mm sein. Die Primärträgerschicht kann auch aus einem anderen Material bestehen. Eine Weiterverarbeitung kann z.B. das Aufbringen des umverformten Reflektorkörpersegments auf einen Trägerkörper oder das Hinterspritzen im Spritzgussverfahren gemäß dem zweiten Aspekt sein.

Insbesondere hervorzuheben ist, dass die Trägerschicht Bereiche unterschiedlicher Dehnfestigkeit aufweisen kann, so dass auch der Verbund mit der Reflexionsfolie Bereiche unterschiedlicher Dehnfestigkeit aufweist. Bereiche unterschiedlicher Dehnfestigkeit der Trägerschicht können, wie zuvor in Bezug auf das Trägermaterial beschrieben, durch unterschiedliche Materialdicken der Trägerschicht erzeugt werden. Ferner ist denkbar, dass Bereiche unterschiedlicher Dehnfestigkeit durch eine Kombination unterschiedlicher Materialdicken oder Materialeigenschaften der Trägerschicht und des Trägermaterials erzeugt werden.

Mehrere derartig hergestellte Reflektorkörpersegmente können zu einem retroreflektierenden Marker zusammengesetzt werden. Dazu können die Reflektorkörpersegmente auf einen festen Grundkörper aufgebracht und dort z.B. aufgeklebt oder in anderer Weise befestigt werden.

Denkbar ist ferner, ein solches Reflektorkörpersegment durch Hinterspritzen zu einem Reflektorkörpersegment weiterzuverarbeiten und die Reflektorkörpersegmente erst anschließend zu einem retro-reflektierenden Marker zusammen zu setzen.

Weitere Abwandlungen und Vorgehensweisen hinsichtlich des Verfahrens zum Herstellen eines Reflektorkörpersegments im Umformverfahren ergeben sich in analoger Weise aus dem vorstehend beschriebenen Herstellungsverfahren im Spritzgussverfahren.

### Kurze Beschreibung der Figuren

In den Figuren zeigt:
- Figur 1: eine Reflexionsfolie zu Beschichtung eines Reflektorkörpersegments,
- Figur 2: eine erste Ausführungsform eines Reflektorkörpers, der sechs verschiedene Reflektorkörpersegmente aufweist,
- Figur 3: eine zweite Ausführungsform eines Reflektorkörpers, der vier verschiedene Reflektorkörpersegmente aufweist,
- Figur 4: eine dritte Ausführungsform eines Reflektorkörpers, der zwei verschiedene Reflektorkörpersegmente aufweist, die in einem der vorliegend beschriebenen Verfahren hergestellt wurden.
- Figuren 5a bis 5d: zeigen verschiedene Stadien eines ersten Verfahrens zum Herstellen eines Reflektorkörpersegments.
- Figuren 6a bis 6d: zeigen verschiedene Stadien eines zweiten Verfahrens zum Herstellen eines Reflektorkörpersegments.
- Figur 7a bis 7d: zeigen verschiedene Stadien eines dritten Verfahrens zum Herstellen eines Reflektorkörpersegments.
- Figur 8a bis 8d: zeigen verschiedene Stadien eines vierten Verfahrens zum Herstellen eines Reflektorkörpersegments.
- Figur 9a bis 9e: zeigen verschiedene Schritte eines Verfahrens zum Überziehen einer Halbkugel mit einer Reflexionsfolie.
- Figuren 10a bis 10d: zeigen verschiedene Aufnahmen der Oberfläche eines retroreflektierenden Körpers im Stand der Technik.

- Figur 11: zeigt eine Messanordnung zum Überprüfen der Reflexionseigenschaften eines Reflektorkörpers, insbesondere eines kugelförmigen retro-reflektierenden Markers.
- Figuren 12a bis 12d: zeigen Aufnahmen eines herkömmlichen Markers, die von der in Figur 11 gezeigten Messanordnung aufgenommen wurden und
- Figuren 13a bis 13d: zeigen Aufnahmen eines Markers, der durch ein in Bezug auf die Figuren 7 und 8 beschriebenes Verfahren hergestellt wurde, und die von der in Figur 11 gezeigten Messanordnung aufgenommen wurden.

### Detaillierte Beschreibung der Figuren

Im Folgenden werden einzelne Ausführungsformen anhand der Figuren beispielhaft detailliert beschrieben. Dabei weisen die einzelnen beschriebenen Ausführungsformen zum Teil Merkmale auf, die nicht zwingend erforderlich sind, um dem beanspruchten Gegenstand zu entsprechen, die aber in bestimmten Anwendungsfällen gewünschte Eigenschaften bereit stellen.

Nur diejenigen Teile der Offenbarung, die in den Schutzumfang der Ansprüche fallen, bilden einen Teil der Erfindung. Somit bedeutet der in der Beschreibung verwendete Begriff "Ausführungsform" nicht automatisch eine Ausführungsform gemäß der Erfindung nach den Ansprüchen 1 und 2.

Hinsichtlich der verschiedenen Ausführungsformen werden aus Gründen der Übersichtlichkeit vergleichbare Komponenten mit denselben Bezugszeichen bezeichnet. Um Wiederholungen zu vermeiden werden in Bezug auf unterschiedliche Ausführungsformen nur die Unterschiede näher beschrieben, welche zum Verständnis der technischen Lehre sinnvoll erscheinen.

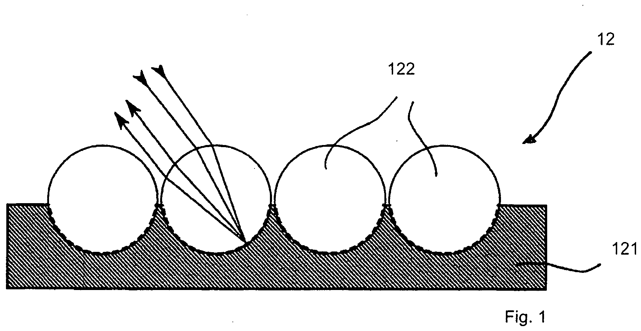

Figur 1 zeigt eine schematische Ansicht einer reflektierenden Folie, die als Reflexionsfolie 12 zur Beschichtung eines Reflektorkörpersegments verwendet werden kann. Dargestellt wird die Retro-Reflexion von Mikrokugeln 122. Eine andere Bezeichnung für Mikrokugeln 122 ist Microspheres. Die Mikrokugeln 122 können z.B. einen Durchmesser von ca. 40 µm bis 100 µm aufweisen.

Im Gegensatz zur diffusen Reflexion einer Oberfläche werden bei einer Oberfläche einer retro-reflektierenden Folie, wie aus der Zeichnung ersichtlich ist, die einfallenden Lichtstrahlen im Wesentlichen parallel reflektiert, so dass sie zur Lichtquelle zurück geworfen also retro-reflektiert werden. Dazu können die Mikrokugeln 122 auf der den Lichtstrahlen abgewandten Seite mit einer reflektierenden Schicht überzogen sein. Eine Reflexion ist unabhängig vom Einfallswinkel bis zu einem Grenzwinkel möglich, in dem die dargestellten Kugeln sich gegenseitig verdecken.

Retro-reflektierende Oberflächen können außer über Mikrokugeln 122 auf verschiedene Art und Weise realisiert werden, z.B. über Retro-Reflektoren aus Planspiegeln oder Planflächen. Hier unterscheidet man z.B. Bauformen mit zwei oder drei zueinander senkrecht stehenden spiegelnden Ebenen. Bauformen mit drei spiegelnden Ebenen werden z.B. als Tripelspiegel bezeichnet. Als Tripelprisma wird ein Glaskörper bezeichnet, der vorn plan ist und rückseitig drei zueinander in einem Winkel von 90° stehende unverspiegelte Planflächen besitzt.

Die Beschreibung im Folgenden wird auf Reflexionsfolien 12 mit Mikrokugeln 122 beschränkt, die auf einem Trägermaterial 121 als Bestandteil der Reflexionsfolie 12 aufgebracht sind.

Derartige Reflexionsfolien 12 sind in verschiedenen Ausführungen und von verschiedenen Herstellern auf dem Markt erhältlich, z.B. unter dem Markennamen Scotchlite von der Firma 3M.

Die Trägermaterialien 121 derartiger Reflexionsfolien 12 können z.B. textile Trägermaterialien, Trägermaterialien aus einer homogenen Schicht (z.B. aus einer Polymerfolie) oder andere Trägermaterialien aufweisen. Reflexionsfolien 121 können selbstklebend ausgeführt sein, also z.B. eine Beschichtung aus einem Klebematerial aufweisen. Auf dem Trägermaterial 121 können die Reflektorelemente also z.B. die Mikrokugeln 122 angeordnet sein.

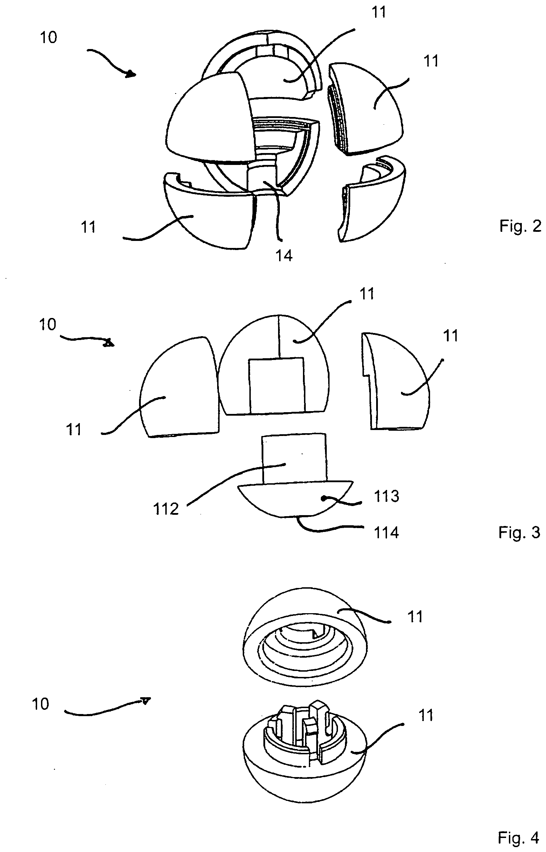

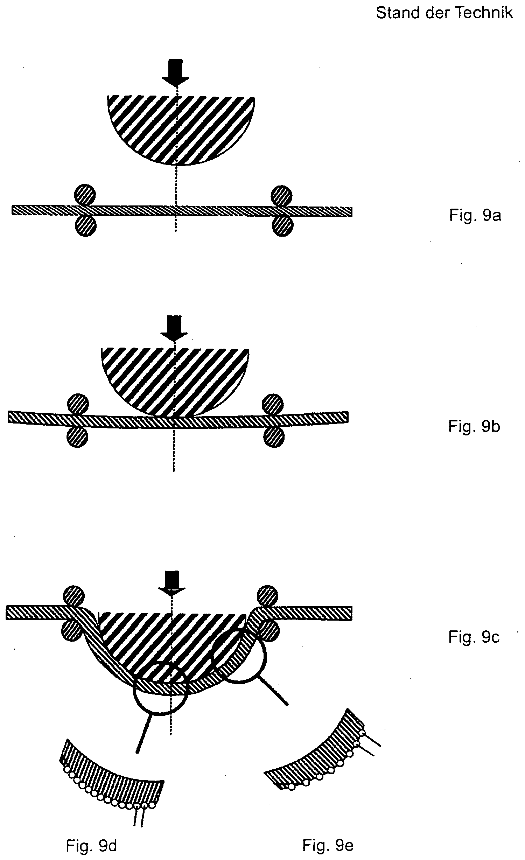

Figur 2 zeigt einen Reflektorkörper 10 in einer Explosionsansicht. Der Reflektorkörper 10 weist sechs verschiedene Reflektorkörpersegmente auf, von denen einige beispielhaft mit dem Bezugszeichen 11 bezeichnet sind. Bei dem dargestellten Reflektorkörper 10 können mehrere oder alle der dargestellten Reflektorkörpersegmente 11 eine Beschichtung aufweisen, die eine Reflexionsfolie 12 umfasst, wie sie beispielsweise in Figur 1 dargestellt ist. Die verschiedenen Reflektorkörpersegmente 11 können in einem der Verfahren hergestellt worden sein, die im vorliegenden Dokument beschrieben werden. Ferner ist denkbar, dass eines oder mehrere der dargestellten Reflektorkörpersegmente 11 in einem Verfahren, wie es in Figuren 9a bis 9c schematisch dargestellt ist, hergestellt wurde. Hierbei kann eine unterschiedliche Dehnung unterschiedlicher Folienbereich resultieren, wie dies in Figuren 9d und 9e dargestellt ist. Die unterschiedliche Dehnung kann jedoch aufgrund der beschriebenen geometrischen Gestaltung der Reflektorkörpersegmente 11 um das gewünschte Maß verringert werden. So können auch in einem derartigen Verfahren die gewünschten Reflektionseigenschaften der Reflektorkörpersegmente 11 beziehungsweise des Reflektorkörpers 10 erzielt werden.

Aus der Figur 2 ist dabei ersichtlich, dass jeweils drei der Reflektorkörpersegmente 11 zu einem Halbkugelelement 111 zusammengesetzt werden können, wobei sich zwei derartige Halbkugelelemente 111 wiederum zu einer Kugelform ergänzen und somit den Reflektorkörper 10 bilden können. Dabei sind die in der Figur oben dargestellten drei Reflektorkörpersegmente 11 im Wesentlichen identisch ausgebildet. Auch die in Figur 2 und dargestellten drei Reflektorkörpersegmente 11 sind im Wesentlichen identisch weisen jedoch im Gegensatz zu den oberen drei Reflektorkörpersegmenten 11 eine Ausnehmung auf, die sich bei dem zusammengesetzten Reflektorkörper 10 zu einer Adapteraufnahme 14 ergänzen. Die einzelnen Reflektorkörpersegmente 11 weisen im Bereich Ihrer Fügekanten eine geometrische Gestaltung auf, die beim Zusammensetzen der Reflektorkörpersegmente 11 einen Formschluss ermöglichen kann. Die Reflektorkörpersegmente 11 können zusätzlich oder alternativ miteinander verklebt oder verschweißt werden oder in anderer Weise miteinander verbunden werden.

Bei dieser Ausführungsform ist ebenfalls vorstellbar, dass eines der Halbkugelelemente 111 lediglich aus einem oder mehreren Reflektorkörpersegmenten 11 und das andere Halbkugelelement 111 aus zwei oder mehreren Reflektorkörpersegmente 11 aufgebaut wird.

Figur 3 zeigt eine Ausführungsform eines Reflektorkörpers 10, der vier verschiedene Reflektorkörpersegmente 11 aufweist. Bei dieser Ausführungsform können die im Bild oben dargestellten drei Reflektorkörpersegmente 11 wiederum im Wesentlichen identisch ausgebildet sein. Ferner ist in dieser Ausführungsform ein kugelsegmentförmiges Basissegment 112 vorgesehen, auf das die anderen drei Reflektorkörpersegmente 11 aufgebracht werden können. Wie sich aus der Figur 3 ergibt, bezeichnet der Begriff "kugelsegmentförmiges" Basissegment 112 ein

Reflektorkörpersegment 11, dessen Reflexionsoberfläche 113 im Wesentlichen der Oberfläche eines Kugelsegments entspricht, wenn man den Bereich der Adapteraufnahme 14 außer Betracht lässt.

Der kugelsegmentförmige Bereich des Basissegments 112 kann dabei, wie in dieser Ausführungsform dargestellt ist, kleiner als eine Halbkugel sein, so dass sich die übrigen Reflektorkörpersegmente 11 zu einem Teil einer Kugeloberfläche ergänzen, der größer als eine Halbkugel ist. Bei einer Abwandlung dieser Ausführungsform ist ebenfalls denkbar, dass das Basissegment 112 mit der Adapteraufnahme 14 eine halbkugelförmige Oberfläche aufweist und sich die übrigen Reflektorkörpersegmente 11 ebenfalls zu einer halbkugelförmigen Oberfläche ergänzen.

Bei dieser Ausführungsform ist ebenfalls vorstellbar, dass zusätzlich zum Basissegment 112 lediglich zwei Reflektorkörpersegmente 11 oder mehr als drei Reflektorkörpersegmente 11 vorgesehen werden. Eine Ausführungsform gemäß der Erfindung verlangt zusätzlich zum Basissegment 112 zumindest zwei Reflektorkörpersegmente 11. Das Basissegment 112 weist einen im wesentlichen zylindrischen Haltebereich auf, der mit teilzylindrischen Ausnehmungen der anderen Reflektorkörpersegmente 11 korrespondiert, so dass die Reflektorkörpersegmente 11 in einfacher Weise auf das Basissegment 112 aufgebracht werden können, wie das bereits in Bezug auf Figur 2 beschrieben wurde.

Figur 4 zeigt eine einen Reflektorkörper 10, der zwei verschiedene Reflektorkörpersegmente 11 aufweist, die in einem der in diesem Dokument beschriebenen Verfahren, z.B. unter Verwendung eines Spritzgussverfahrens, hergestellt wurden.

Durch eines dieser Verfahren, die auch im Folgenden noch detailliert beschrieben werden, kann eine gewünschte Reflexionseigenschaft der Reflektorkörpersegmente 11 durch Ausgestaltung des Herstellungsverfahrens erreicht werden, so dass auf eine mehrteilige Ausgestaltung eines Reflektorkörpers 10, wie vorstehend beschrieben wurde, verzichtet werden kann. Denkbar ist jedoch ebenfalls, dass auch bei der Anwendung entsprechender Herstellungsverfahren ein Reflektorkörper 10 mit mehr als zwei Reflektorkörpersegmenten 11 hergestellt wird.

Bei dem Reflektorkörper 10, der in Figur 4 dargestellt wird, sind zwei Reflektorkörpersegmente 11 vorgesehen, die über einen Clipverschluss miteinander verbunden werden können. Dabei kann einer der beiden Reflektorkörpersegmente 11 eine Adapteraufnahme aufweisen, die in dieser Figur nicht bezeichnet ist.

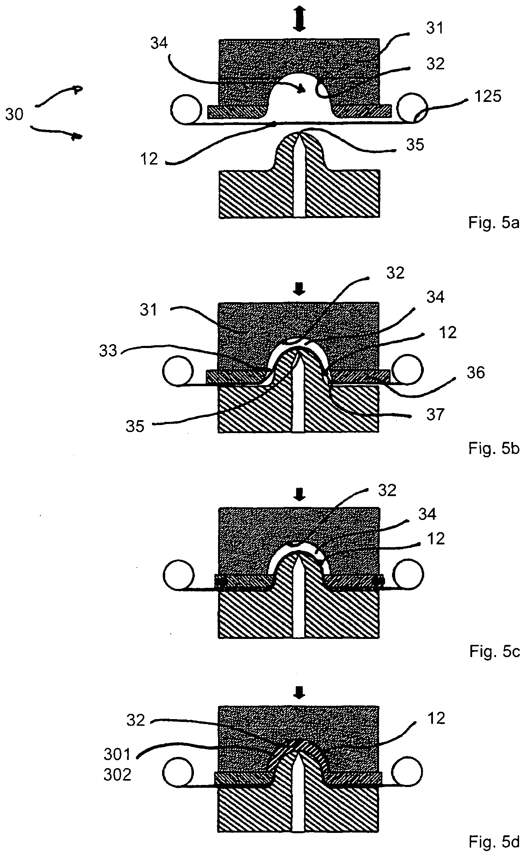

Figuren 5a bis 5d zeigen verschiedene Stadien eines ersten Verfahrens zum Herstellen eines Reflektorkörpersegments 11.

Wie es in den Figuren 5a bis 5d dargestellt ist wird eine Spritzgussform 30 bereitgestellt, die ein Anlageelement 31 mit einer Anlagefläche 32 und ein gegenüberliegendes Element mit einer Einspritzmündung 35 aufweist. Die Anlagefläche 32 begrenzt einen Bereich einer Kavität 34, in die im Rahmen des Verfahrens Spritzgussmaterial 301 eingespritzt werden kann. Der durch die Anlagefläche 32 begrenzte Bereich kann dabei im Wesentlichen der Reflexionsoberfläche 113 des herzustellenden Reflektorkörpersegments entsprechen.

In Figur 5a ist die Spritzgussform 30 in einer Position dargestellt, in der das Anlageelement 31 und das gegenüberliegende Element auseinander gefahren sind. In der Figur ist ersichtlich, dass die Reflexionsfolie 12 in Form eines kontinuierlich bereitgestellten Reflexfolienmaterials 125 zwischen dem Anlageelement 31 und der Einspritzmündung 35 bereitgestellt wird.

In Figur 5b sind das Anlageelement 31 und das gegenüberliegende Element zusammen gefahren worden, so dass die Kavität 34, in der die Reflexionsfolie 12 bereitgestellt ist als geschlossener Hohlraum vorliegt, der auf einer Seite, die der Einspritzmündung 35 gegenüberliegt, zumindest teilweise durch die Anlagefläche 32 begrenzt wird. Angrenzend an einen Randbereich 33 der Anlagefläche 32 ist ein Kantenelement 36 vorgesehen, das in der vorliegenden Ausführungsform als zweigeteiltes Kantenelement 36 ausgestaltet ist. Das Kantenelement 36 weist im Bereich des Randbereichs 33 eine abgerundete Kante 37 auf, welche die Anlagefläche 32 in deren Randbereich 33 umfänglich umgeben kann.

Beim Schließen der Spritzgussform 30 wird in der dargestellten Ausführungsform der Teil der Spritzgussform, der der Anlagefläche 32 gegenüberliegt, in die Reflexionsfolie 12 gedrückt, so dass diese vorgedehnt wird. Dabei kann die Folie von außen über die abgerundete Kante 37 nachfließen.

In Figur 5c ist dargestellt, dass das zweiteilige Kantenelement 36 in Richtung der Einspritzmündung 35 zusammen gefahren wurde, so dass die Bereiche des Kantenelement 36 mit der abgerundeten Kante 37 über den Randbereich 33 der Anlagefläche 32 hinaus vorgeschoben wurden. In dieser Position wird im Übergangsbereich zwischen der abgerundeten Kante 37 zu dem Oberflächenbereich des Kantenelements 36, der in dieser Position einen Teil der Kavität 34 begrenzt, eine scharfe Kante gebildet, an der die Reflexionsfolie 12 beim Einspritzen von Spritzgussmaterial 301 in die Kavität 34 zum Abreißen gebracht werden kann.

In einem nächsten Verfahrensschritt kann das Spritzgussmaterial über die Einspritzmündung 35 hinter die Reflexionsfolie 12 in die Kavität 34 gespritzt werden, so dass die Reflexionsfolie 12 gewissermaßen aufgeblasen wird und so in Anlage mit der Anlagefläche 32 gebracht wird, wie es in Figur 5d dargestellt ist. Beim Einspritzen des Spritzgussmaterials 301 kann sich die Reflexionsfolie 12 je nach Eigenschaft des Trägermaterials 121 im Wesentlichen gleichmäßig verformen, so dass die Reflexionsfolie 12 über den gesamten Bereich der Reflexionsoberfläche gleichmäßig gedehnt wird.

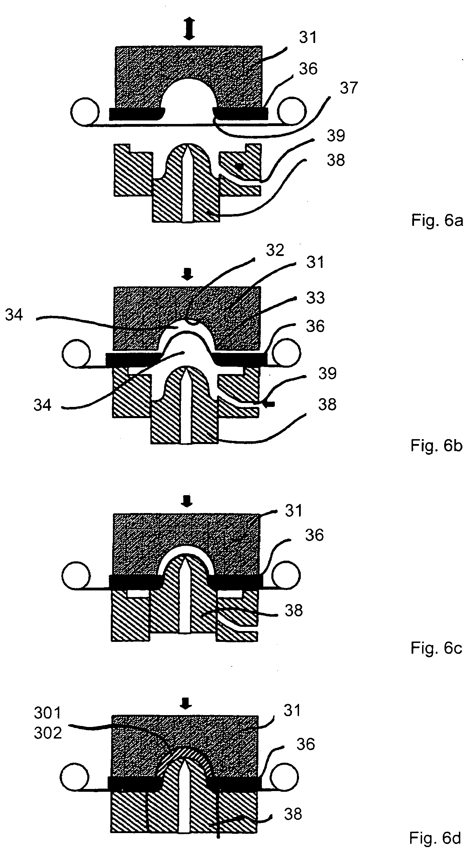

Figuren 6a bis 6d zeigen verschiedene Stadien eines zweiten Verfahrens zum Herstellen eines Reflektorkörpersegments 11, das im Wesentlichen dem eben gerade beschriebenen ersten Verfahren entspricht. Auch die verwendete Vorrichtung zur Durchführung des Verfahrens entspricht im Wesentlichen der Vorrichtung, die in Bezug auf das erste Verfahren beschrieben wurde. Um unnötige Wiederholungen zu vermeiden, wird im Folgenden vorwiegend auf die Unterschiede zum ersten Verfahren eingegangen.

Ein erster Unterschied der in den Figuren 6a bis 6d dargestellten Vorrichtung im Vergleich zur der in den Figuren 5a bis 5d dargestellten Vorrichtung besteht darin, dass das Kantenelement 36 bei der in den Figuren 6a bis 6d dargestellten Vorrichtung einteilig, z.B. in Form eines durchgehenden Rings, der sich um die Anlagefläche 32 erstreckt, ausgeführt ist. Während das Kantenelement 36 bei der in den Figuren 6a bis 6d dargestellten Vorrichtung zwei- oder mehrteilig ausgeführt ist und in eine Richtung, die in Bezug auf die Figuren 5a bis 5d als seitliche Richtung beschrieben werden kann, in eine Ausstoßposition auseinander gezogen und in eine Einspritzposition geschlossen werden kann. Demgegenüber kann das Kantenelement 36, welches bei der in den Figuren 6a bis 6d dargestellten Vorrichtung verwendet werden kann, von einer Einspritzposition von dem Anlageelement 31 weg in eine Ausstoßposition verlagert werden. In der Einspritzposition, die in Figur 6a dargestellt ist, befindet sich das Kantenelement 36 in Berührung mit dem Anlageelement 31 und die abgerundete Kante 37 des Kantenelement 36 kann um den Randbereich 33 des Anlageelements 31 angeordnet sein, der sich um die Anlagefläche 32 des Anlageelements 31 herum erstreckt. Dabei kann die spitze Kante des Kantenelement 36 vom Randbereich 33 der Anlagefläche 32 etwas nach innen vorstehen, so dass die Reflexionsfolie 12 an dieser Kante beim Einspritzvorgang abgerissen oder abgeschnitten werden kann.

Von der Einspritzposition kann das Kantenelement 36 in die Ausstoßposition verfahren werden in der das Kantenelement 36 vom Anlageelement 31 beabstandet ist. Dabei kann der Abstand zwischen Kantenelement 36 und Anlageelement 31 in der Ausstoßposition so groß sein, dass das Spritzgussteil 302 beim Ausstoßen zwischen Kantenelement 36 und Anlageelement 31 hindurch passt.

Ein weiterer Unterschied der Spritzgussvorrichtung liegt darin, dass der Teil der Spritzgussform, welche dem Anlageelement 31 gegenüberliegt, mit einem verfahrbaren Kernbereich 38 ausgestaltet ist, so dass die Spritzgussform 30 geschlossen werden kann, ohne dass der Kernbereich 38 in die Reflexionsfolie 12 eindringt. Ferner weist die Spritzgussform 30 auf der Einspritzseite einen Luftkanal 39 auf, über den Luft in den einspritzseitigen Bereich der Kavität 34 eingeblasen werden kann, so dass sich die Reflexionsfolie 12 in Richtung der Anlagefläche 32 wölbt. Damit die Luft, die sich zwischen der Reflexionsfolie 12 und der Anlagefläche 32 befindet, aus dem anlageseitigen Bereich der Kavität 34 entweichen kann, kann beim Einblasen der Luft noch ein Spalt zwischen dem Kantenelement 36 und dem Anlageelement 31 offen gelassen werden, wie das in Figur 6b gezeigt ist. Anschließend kann der Kernbereich 38 nach vorne in Richtung der Anlagefläche 32 in die Einspritzposition verfahren werden.

Das beschriebene Einblasen der Luft kann derart erfolgen, dass die Reflexionsfolie 12 in Anlage mit der Anlagefläche 32 gebracht wird. Denkbar ist ebenfalls, dass die Reflexionsfolie 12 lediglich vorgeformt wird, wie das in Figuren 6b und 6c gezeigt ist, so dass sie erst beim Einspritzen des Spritzgussmaterials 301 endgültig in Anlage mit der Anlagefläche 32 des Anlageelements 31 gebracht wird, wie das in Figur 6d dargestellt ist.

Das beschriebene Einblasen von Luft zum Dehnen oder Vordehnen der Reflexionsfolie 12 bewirkt eine besonders gleichmäßige Dehnung der Reflexionsfolie 12.

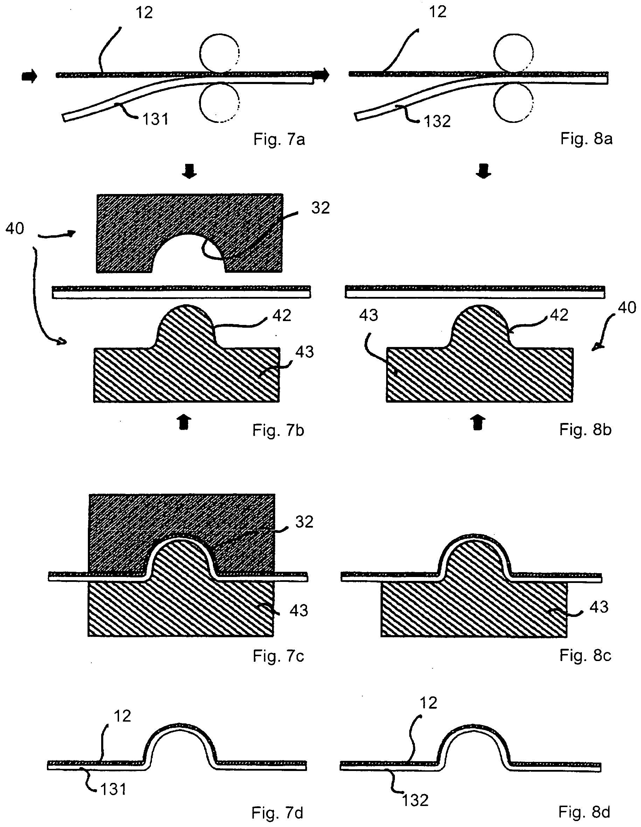

Figur 7a bis 7d zeigen verschiedene Stadien eines dritten Verfahrens zum Herstellen eines Reflektorkörpersegments 11. Figur 8a bis 8d zeigen verschiedene Stadien eines vierten Verfahrens zum Herstellen eines Reflektorkörpersegments 11.

Beide Verfahren zeigen verschiedene Stadien eines Umformverfahrens, die im Wesentlichen gleich ablaufen, so dass sie gemeinsam erläutert werden, wobei nur auf bestimmte Unterschiede hingewiesen wird.

In einem ersten Verfahrensschritt wird die Reflexionsfolie 12 mit dem in Figur 1 beschriebenen und in den Figuren 7a bis 8d nicht dargestellten Trägermaterial 121 auf eine Trägerschicht 131 bzw. auf eine Primärträgerschicht 132 aufgebracht, zum Beispiel aufgeklebt.

Die Trägerschicht 131 bzw. die Primärträgerschicht 132 unterscheiden sich lediglich darin, dass eine Trägerschicht 131 selbsttragende Eigenschaften hat, wobei Material und Dicke der Schicht so gewählt ist, dass die zusammen umgeformten Schichten anschließend formstabil sind. Die Primärträgerschicht 132 kann auch nach dem Umformschritt flexibel bleiben und so gestaltet sein, dass sie im Verbund mit der Reflexionsfolie 12 gewünschte Dehnungseigenschaften zur Verfügung stellt. Ein Verbund aus Reflexionsfolie 12 und einer flexiblen Primärträgerschicht 132 kann demnach einen weiteren Verarbeitungsschritt erfordern, z.B. ein Hinterspritzen oder Aufkleben auf einen Trägerkörper.

Zum Aufbringen der Reflexionsfolie 12 auf die Trägerschicht 131 bzw. die Primärträgerschicht 132 kann Reflexionsfolie 12 mit einer selbstklebenden Schicht versehen sein. Denkbar ist ebenfalls, dass ein Kleber gesondert auf die Reflexionsfolie 12 und/oder auf das Trägermaterial 121 aufgebracht wird und/oder dass durch Erwärmung des Trägermaterials 121 bzw. der Trägerschicht 131 diese teilweise verflüssigt wird und im verflüssigten Zustand durch Krafteinwirkung zusammengepresst wird. Beim Aufbringen der Reflexionsfolie 12 auf die Trägerschicht 131 können die zwei Schichten z.B. durch zwei erwärmte Rollen aufeinander gepresst werden.

Die so miteinander verbundenen Schichten können in einem weiteren Schritt durch ein Umformverfahren umgeformt werden.

Dazu kann eine Umform-Form 40 bereitgestellt werden, die eine Umformfläche aufweist. Die Umformfläche kann als Anlagefläche 32 analog den oben beschriebenen Spritzgussverfahren und/oder als Kernformoberfläche 42 einer Kernform 43 ausgeführt sein.

Bei einer zweiteiligen Umform-Form 40, wie sie in Figuren 7b und 7c dargestellt ist, kann der Umformschritt durch ein Schließen der Umform-Form 40 erfolgen. Denkbar ist ebenfalls, dass eine einteilige Umform-Form 40 bereitgestellt wird, wie sie in den Figuren 8b und 8c dargestellt ist. In dem Fall kann der Umformschritt durch Anlegen eines Unterdrucks auf Seite der einteiligen Umform-Form 40 und/oder durch Anlegen eines Überdrucks auf der gegenüberliegenden Seite der beiden Schichten erfolgen.

Der Umformschritt kann durch ein Erwärmen der Schichten zur gewünschten Veränderung der Viskosität der Trägerschicht 131 bzw. der Primärträgerschicht 132 unterstützt werden.

In den Figuren 7d und 8d sind die beiden miteinander verbundenen Schichten im umgeformten Zustand dargestellt.

In einem weiteren, nicht dargestellten Schritt können die derartig hergestellten Reflektorkörpersegmente 11 vom restlichen Teil der Schichten getrennt werden. Denkbar ist ebenfalls, das die Schichten im dargestellten umgeformten Zustand in eine Spritzgussform 30 eingelegt und zusätzlich hinterspritzt werden.

Ferner ist denkbar, dass die umgeformten Reflektorkörpersegmente 11 z.B. manuell auf einen Trägerkörper aufgebracht werden.

Die in Figur 11 gezeigte Messanordnung wurde bereits in der Beschreibungseinleitung beschrieben. Mit dieser Messanordung wurden die Aufnahmen des Reflektorkörpers erstellt, die in der Figurenserie 13 dargestellt sind.

Der Reflektorkörper, der in der Figurenserie 13 dargestellt ist, wurde durch ein Verfahren hergestellt, das im Wesentlichen dem Verfahren entsprach, das in den Figuren 7a, 7b und 7c bzw. 8a, 8b und 8c dargestellt ist. Demnach wurden zunächst Reflektorkörpersegmente hergestellt und dann wurden die Reflektorkörpersegmente zu einem Reflektorkörper verbunden.

Die Reflektorkörpersegmente wurden dabei durch folgende Schritte hergestellt:
- Aufbringen einer Reflexionsfolie 12 auf eine Primärträgerschicht 131, 132
- Bereitstellen einer Umform-Form 40 mit einer Umformfläche 42, welche die Umform-Form 40 in einem Bereich begrenzt,
- Bereitstellen der Primärträgerschicht 131, 132 zusammen mit der darauf aufgebrachten Reflexionsfolie 12 neben der Umformfläche 42,
- Plastisches Umformen der Primärträgerschicht 131, 132 zusammen mit der darauf aufgebrachten Reflexionsfolie 12 bis die Primärträgerschicht 131, 132 zusammen mit der darauf aufgebrachten Reflexionsfolie 12 im Wesentlichen die Form der Umformfläche 42 angenommen hat.

Die Primärträgerschicht 131, 132, auf welche die Reflexionsfolie aufgebracht wurde, war vorliegend eine PVC-Schicht mit einer Stärke von 0,15 mm. Andere Schichtstärken sind ebenfalls denkbar.

Die Umform-Form (40) bzw. die Umformfläche (42) wurde bei diesem Verfahren jeweils in Form von halbkugelförmigen Trägerkörpern bereit gestellt, welche im Wesentlichen denen entsprachen, die in Figur 4 dargestellt sind. Mittels dieser Trägerkörper als Umformfläche wurde die Primärträgerschicht 131, 132 und die darauf aufgebrachten Reflexionsfolie (12) umgeformt. Beim Umformvorgang wurde die Primärträgerschicht 131, 132 gleichzeitig durch Verkleben fest mit dem halbkugelförmigen Trägerkörper verbunden. Die halbkugelförmigen Trägerkörper wurden damit Bestandteil des Reflektorkörpersegements 11 und des späteren Reflektorkörpers 10. Nach dem Umformschritt wurde die Reflexionsfolie 12 zusammen mit der Primärträgerschicht 131, 132, auf der sie aufgebracht wurde, entlang der Kanten des Trägerkörpers, bei diesem Beispiel also entlang der Äquatorlinie, abgeschnitten.

Anschließend wurden die beiden Reflektorkörpersegmente zu einem Reflektorkörper 10 verbunden.

Einer der so hergestellten Reflektorkörper in Form eines kugelförmigen retroreflektierenden Marker wurde anschließend durch die die Messanordnung, die mit Bezug auf Figur 11 beschrieben wurde, auf seine Reflexionseigenschaften überprüft.

Die Aufnahme wurden über eine Machine Vision Software in Echtzeit ausgewertet. Die korrespondierenden Messungen wurden ebenfalls an die CIE Norm 054.2-2001 angelehnt.

Bei den durchgeführten Messungen an den Reflektorkörpern in Figurenserie 13 wurde jeweils über einen Durchmesser ein kreisförmiger Messpunkt definiert, welcher dem Referenzoberflächenbereich R entspricht. Der Referenzoberflächenbereich R weist einen Durchmesser auf, der in etwa einem Achtel des Durchmessers des Markers entspricht.

Die Figurenserie 13 stellt Aufnahmen und Ausschnitte aus Aufnahmen dar, welche mit der beschriebenen Messanordnung von dem, wie beschrieben hergestellten Reflektorkörper aufgenommen wurden.

Figur 13a zeigt eine Aufnahme des Markers, bei der die Aufnahmerichtung auf einen Äquatorbereich des Markers gerichtet wurde. Die auf den Kugelmittelpunkt des Markers gerichtete optische Achse der CCD Kamera 4 mit dem telezentrischen Objektiv 3 durchstößt dabei, wie einleitend in Bezug Figur 12a beschrieben wurde, die Kugeloberfläche bei der dargestellten Aufnahme im Äquatorbereich etwas neben der Äquatorlinie. Auf die übrigen Ausführungen in Bezug zur Figurenserie 12 zur Messanordnung und der Durchführung der Messung wird verwiesen.

Der Äquator selber ist in Figur 13a als dünne dunkle Linie zu erkennen, die erkennbar deutlich dünner ausgebildet ist als die des Markers in Figur 12a.

Das beschriebene Herstellungsverfahren gewährleistet demnach auch bezüglich des Fügebereichs zwischen den Kugelhälften deutlich kleinere Fertigungstoleranzen, die zu einer schmaleren Fügelinie führen, entlang der keine retro-reflektierende Oberfläche bereit gestellt werden kann. Auch dies führt zu einer gleichmäßigeren Gesamtreflexion aus unterschiedlichen Blickrichtungen.

Figur 13b zeigt eine Aufnahme des Markers, bei der die Aufnahmerichtung auf einen Polbereich des Markers gerichtet wurde. Figur 13c zeigt eine Ausschnittsvergrößerung des Referenzoberflächenbereichs R aus Figur 13a. Figur 13d zeigt eine Ausschnittsvergrößerung des Referenzoberflächenbereichs R aus Figur 13b.

Die Helligkeitswerte der Referenzoberflächenbereiche R aus der Figurenserie 13 wurden ermittelt. Dabei wurde ermittelt, dass der Rückstrahlwert in cd/lux/m² des Referenzoberflächenbereichs R im Äquatorbereich nur 10% unter dem Rückstrahlwert in cd/lux/m² des Referenzoberflächenbereichs R im Polbereich lag und somit deutlich verbessert ist gegenüber den Werten des Markers aus der Figurenserie 12.

Weitere Verbesserungen des Verhältnisses der Rückstrahlwerte können erzielt werden, wenn ein anderes der hier beschriebenen Herstellungsverfahren zur Anwendung kommt oder wenn das im konkreten Fall des Reflektorkörpers 10 in Figur 13 beschriebene Herstellungsverfahren entsprechend modifiziert wird, etwa durch Hinterspritzen eines umgeformten Verbunds aus Primärträgerschicht 131, 132 und der darauf aufgebrachten Reflexionsfolie 12 und/oder eine Herstellung des Reflektorkörpers 10 aus drei oder mehr Reflektorkörpersegmenten 11.

### Bezugszeichenliste

- 1: Messobjekt
- 2: Sockel
- 3: Objektiv mit Beleuchtungseinheit
- 4: CCD Kamera

- 10: Reflektorkörper

- 11: Reflektorkörpersegment
- 111: Halbkugelelement
- 112: Basissegment
- 113: Reflexionsoberfläche

- 12: Reflexionsfolie
- 121: Trägermaterial
- 122: Mikrokugeln
- 125: Reflexionsfolienmaterial

- 131: Trägerschicht
- 132: Primärträgerschicht

- 14: Adapteraufnahme

- 30: Spritzgussform
- 301: Spritzgussmaterial
- 302: Spritzgussteil
- 31: Anlageelement
- 32: Anlagefläche
- 33: Randbereich
- 34: Kavität
- 35: Einspritzmündung
- 36: Kantenelement
- 37: abgerundete Kante
- 38: Kernbereich
- 39: Luftkanal

- 40: Umform-Form
- 42: Kernformoberfläche
- 43: Kernform

- R: Referenzoberflächenbereich

## Patentansprüche

1. Reflektorkörper (10), nämlich kugelförmiger retro-reflektierender Marker, welcher zumindest drei Reflektorkörpersegmente (11) aufweist, wobei jedes Reflektorkörpersegment (11) eine Beschichtung aufweist, die eine Reflexionsfolie (12) umfasst, wobei der Reflektorkörper (10) eine im Wesentlichen kugelförmige Reflexionsoberfläche aufweist, wobei der Reflektorkörper (10) ein kugelsegmentförmiges Basissegment (112) mit einer Adapteraufnahme aufweist, wobei das Basissegment (112) zumindest ein Reflektorkörpersegment (11) umfasst, und wobei der Reflektorkörper (10) ferner zumindest zwei weitere Reflektorkörpersegmente (11) aufweist, welche das kugelsegmentförmige Basissegment (112) zur Kugelform ergänzen, wobei das Basissegment (112) einen im wesentlichen zylindrischen Haltebereich aufweist, der mit teilzylindrischen Ausnehmungen der anderen Reflektorkörpersegmente (11) korrespondiert, so dass die Reflektorkörpersegmente (11) auf das Basissegment (112) aufgebracht werden können.

2. Reflektorkörper (10) nach dem vorstehenden Anspruch, wobei die Reflektorkörpersegmente (11) durch Formschluss und/oder durch Reibschluss und/oder durch Verkleben und/oder durch Verschweißen miteinander verbunden sind.

## Claims

1. Reflector body (10), in particular a spherical retro-reflective marker which has at least three reflector body segments (11), wherein each reflector body segment (11) has a coating which comprises a reflection film (12), wherein the reflector body (10) has a substantially spherical reflection surface, wherein the reflector body (10) has a sphere segment-shaped base segment (112) with an adapter receptacle, wherein the base segment (112) has at least one reflector body segment (11), and wherein the reflector body (10) furthermore has at least two further reflector body segments (11), which complement the sphere segment-shaped base segment (112) to form a spherical shape, wherein the base segment (112) has a substantially cylindrical holding portion which corresponds to partially cylindrical recesses of the other reflector body segments (11) such that the reflector body segments (11) can be applied easily to the base segment (112).

2. Reflector body (10) according to the preceding claim, wherein the reflector body segments (11) are connected to each other by form-fitting and/or by friction-fitting and/or by bonding and/or by welding.

## Revendications

1. Corps réflecteur (10), notamment un marqueur rétroréfléchissant sphérique, présentant au moins trois segments de corps réflecteur (11), dans lequel chaque segment de corps réflecteur (11) présente un revêtement comportant une feuille réfléchissante (12), dans lequel le corps réflecteur (10) présente une surface supérieure réfléchissante essentiellement sphérique, dans lequel le corps réflecteur (10) présente un segment de base en forme de segment sphérique (112) avec un logement d'adaptateur, dans lequel le segment de base (112) comporte au moins un segment de corps réflecteur (11), et dans lequel le corps réflecteur (10) présente en outre au moins deux autres segments de corps réflecteur (11), lesquels complètent le segment de base en forme de segment sphérique (112) de manière à former une sphère, dans lequel le segment de base (112) présente une région de maintien essentiellement cylindrique correspondant à des évidements partiellement cylindriques des autres segments de corps réflecteur (11), de telle façon que les segments de corps réflecteur (11) peuvent être appliqués sur le segment de base (112).

2. Corps réflecteur (10) selon la revendication précédente, dans lequel les segments de corps réflecteur (11) sont reliés les uns aux autres par complémentarité de forme et/ou par friction et/ou par collage et/ou par soudage.
